# EUROPÄISCHE PATENTSCHRIFT

(11) **EP 3 586 427 B1**
(45) Veröffentlichungstag und Bekanntmachung des Hinweises auf die Patenterteilung: **08.06.2022**
(21) Anmeldenummer: 18704545.5
(22) Anmeldetag: 09.02.2018
(51) Int. Cl.: H02K 1/27

(54) **ELEKTROMOTOR, INNENROTOR UND ROTORBLECH**
ELECTRIC MOTOR, INTERNAL ROTOR AND ROTOR PLATE
MOTEUR ÉLECTRIQUE, ROTOR INTÉRIEUR ET TÔLE DE ROTOR

(30) Priorität: 22.02.2017 DE 102017103619
(43) Veröffentlichungstag der Anmeldung: 01.01.2020
(73) Patentinhaber: Ebm-Papst St. Georgen GmbH & CO. KG, 78112 St. Georgen (DE)
(72) Erfinder: SCHULDE, Arnold, 78054 VS-Schwenningen (DE); HERR, Jürgen, 78112 St. Georgen (DE); FEHRENBACH, Johannes, 78089 Unterkirnach (DE); FLAIG, Markus, 78739 Hardt (DE); MAYER, Christoph, 78112 St. Georgen (DE); POYRAZ, Serkan, 78048 VS-Villingen (DE); RADJENOVIC, Bozidar, 78112 St. Georgen (DE)
(74) Vertreter: Staeger & Sperling Partnerschaftsgesellschaft mbB
(86) Internationale Anmeldenummer: PCT/EP2018/053318
(87) Internationale Veröffentlichungsnummer: WO 2018/153700

(56) Entgegenhaltungen:
- WO-A1-2008/065146
- WO-A2-2014/147102
- DE-A1-102005 041 676
- DE-A1-102015 207 663

## Beschreibung

Die Erfindung betrifft einen Elektromotor, einen Innenrotor und ein Rotorblech.

Elektromotoren nach Art eines Innenläufermotors haben einen Außenstator und einen drehbeweglich in dem Außenstator angeordneten Innenrotor mit Permanentmagneten.

Derartige Innenläufermotoren werden wegen ihres niedrigen axialen Trägheitsmoments beispielsweise für Antriebsaufgaben verwendet, bei denen ein Elektromotor mit seinen Bewegungen elektrischen Befehlen sehr schnell folgen muss, z.B. als Servomotor. In einem solchen Motor dürfen die Permanentmagnete des Innenrotors, welche in einem dem Innenrotor zugeordneten Blechpaket angeordnet sind, nicht klappern und sich auch bei höheren Drehzahlen nicht in axialer Richtung verschieben, d.h. sie müssen in axialer und radialer Richtung sicher im Blechpaket fixiert sein. Im Automotive-Bereich wird beispielsweise für extreme Einsatzbereiche verlangt, dass die Magneten bei Stößen mit einer Beschleunigung von 50 g fest im Innenrotor bleiben. Zu diesem Zweck kann man die Permanentmagnete in das Blechpaket einkleben, oder zusätzlich an beiden Enden des Blechpakets jeweils eine geeignete, die Magneten abdeckende Sicherungsscheibe befestigen. Auch kann man das Blechpaket mit Kunstharz vergießen, wobei alle diese Verfahren zusätzliche Arbeitsschritte, Zeit und auch Hilfsmaterialien benötigen. Beim Verkleben sind spezielle Arbeitsplätze mit Absaugung, etc. erforderlich.

Die DE 10 2011 101 730 A1 zeigt einen Innenläufermotor, bei welchem die Permanentmagnete elastisch in einem zugeordneten Blechpaket eingespannt werden. Dies geschieht dadurch, dass mittels eines Werkzeugs Halteabschnitte, welche am Außenumfang des Blechpakets vorgesehen sind, radial nach innen eingedrückt (eingekerbt, eingeprägt) werden. Somit erhält man federnde Eindrückungen (Einkerbungen, Einprägungen), welche jeweils eine radial nach innen wirkende Federkraft F in Richtung einer zugeordneten Ausnehmung ausüben, in welcher ein Permanentmagnet des Innenrotors angeordnet ist, so dass dieser in der Ausnehmung eingespannt wird. Nachteilig hierbei ist, dass die federnden Eindrückungen (Einkerbungen, Einprägungen) über die Lebensdauer des Innenläufermotors nachfedern können, sodass sich die Permanentmagneten in den Ausnehmungen lockern können und somit klappern oder aus den Ausnehmungen herausfallen können.

Die DE 10 2007 029 719 A1 zeigt einen Innenläufermotor, bei welchem an entsprechenden Ausnehmungen eines dem Innenrotor zugeordneten Blechpakets jeweils ein federnder Ansatz vorgesehen ist, welcher im unbelasteten Zustand in eine jeweils zugeordnete Ausnehmung einfedert. Dieser federnde Ansatz ist an einer Seite mit dem Blechpaket verbunden, und das andere Ende ist frei. Der federnde Ansatz wird beim Einschieben eines entsprechenden Permanentmagneten in die Ausnehmung vom Permanentmagneten kraftbeaufschlagt und somit elastisch verformt. Somit kann der federnde Ansatz nach dem Einschieben des Permanentmagneten in die Ausnehmung seinerseits eine zugeordnete Federkraft F gegen den Permanentmagneten ausüben, welche diesen in der Ausnehmung einspannt. Es ist jedoch möglich, dass die federnden Ansätze ebenfalls über die Lebensdauer des Innenläufermotors nachfedern, sodass sich die Permanentmagneten auch bei Verwendung dieser federnden Ansätze in den Ausnehmungen lockern können und somit klappern oder aus den Ausnehmungen herausfallen können.

Die DE 10 2012 016 927 A1 offenbart einen Innenrotor für einen Elektromotor, bei dem die Rotormagneten über ein Klemmelement fixiert werden. Es wird ein zusätzliches Bauteil benötigt, was auch die Kosten erhöht.

Die WO 2014/147102 A2 offenbart einen Innenläufermotor mit einem Blechpaket, das mindestens eine erste Ausnehmung und mindestens eine zweite Ausnehmung aufweist. Ein in der ersten Ausnehmung angeordneter Rotormagnet wird fixiert, indem in die zweite Ausnehmung ein Verklemmelement eingebracht und dadurch ein zwischen den Ausnehmungen angeordnetes Klemmglied deformiert und mit einer zum Rotormagneten gerichteten Kraft beaufschlagt wird. Diese Lösung erfordert jedoch zusätzliche Bauteile bzw. eine komplexe Gestaltung des Blechpakets. Es wird ebenfalls ein einen Innenläufermotor mit einem Blechpaket offenbart, bei dem über das Wellenübermaß eine radiale Kraft über ein im Blechpaket integriertes Klemmelement auf die Rotormagneten aufgebracht wird. Diese Lösung ist wegen der aufwendigen Blechgeometrie für kleine Rotordurchmesser schlecht geeignet. Außerdem treten im Blechpaket hohe Dehnbeanspruchungen auf.

Weitere Innenrotoren bzw. Elektromotoren mit Innenrotoren sind aus den Schriften DE 10 2005 041 676 A1, DE 10 2015 207 663 A1 und WO 2008/065146 A1 bekannt.

Es ist deshalb eine Aufgabe der vorliegenden Erfindung, einen neuen Elektromotor, einen neuen Innenrotor und ein neues Rotorblech bereit zu stellen. Diese Aufgabe wird durch den Gegenstand der unabhängigen Patentansprüche gelöst. Bevorzugte Ausführungsformen sind Gegenstand der abhängigen Patentansprüche.

Insbesondere wird die Aufgabe der vorliegenden Erfindung durch einen Innenrotor gemäß Anspruch 1 und einen Elektromotor gemäß Anspruch 14 gelöst. Hierdurch wird ein sicheres Halten des Rotormagneten ermöglicht, und das oben beschriebene Nachfedern kann verhindert werden.

Der erfindungsgemäße Innenrotor ist durch die Merkmale gemäß Anspruch 1 gekennzeichnet. Weitere vorteilhafte Weiterbildungen des Innenrotors werden durch die Merkmale der Ansprüche 2 bis 13 bestimmt.

Der erfindungsgemäße Elektromotor ist durch die Merkmale des Anspruchs 14 gekennzeichnet.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen. Es zeigen:
- Fig. 1: einen Längsschnitt durch einen mit einem Innenrotor und einem Außenstator versehenen Elektromotor gemäß der Erfindung;
- Fig. 2: in einer raumbildlichen Darstellung ein Blechpaket des Innenrotors von Fig. 1 mit ersten Rotorblechen und zweiten Rotorblechen;
- Fig. 3: eine Aufsicht auf das erste Rotorblech von Fig. 2 gemäß einer ersten Ausführungsform;
- Fig. 4: eine vergrößerte Ansicht eines Ausschnitts IV von Fig. 3, mit einem Klemmglied gemäß einer ersten Ausführungsform;
- Fig. 5: in einer Draufsicht ein zweites Rotorblech und ein darunter angeordnetes erstes Rotorblech;
- Fig. 6: eine vergrößerte Ansicht eines Ausschnitts VI von Fig. 5;
- Fig. 7: einen Längsschnitt durch den Innenrotor von Fig. 2;
- Fig. 8: eine vergrößerte Ansicht eines Ausschnitts VIII von Fig. 7;
- Fig. 9: einen Ausschnitt einer Aufsicht des Blechpakets von Fig. 2 mit zugeordnetem Rotormagneten, worin die durch den Rotormagneten verursachte plastische Dehnung veranschaulicht ist;
- Fig. 10: einen Ausschnitt einer Aufsicht des Blechpakets von Fig. 2 mit zugeordnetem Rotormagneten, worin der hydrostatische Spannungszustand im Blechpaket veranschaulicht ist;
- Fig. 11: einen Ausschnitt einer Aufsicht des Blechpakets des Innenrotors von Fig. 1 gemäß einer zweiten Ausführungsform;
- Fig. 12: den Ausschnitt von Fig. 11 mit zugeordnetem Rotormagneten;
- Fig. 13: eine schematische Darstellung des Einpressens eines Rotormagneten in die Tasche;
- Fig. 14: einen Ausschnitt des Blechpakets des Innenrotors von Fig. 1 mit ersten und zweiten Ausnehmungen gemäß einer dritten Ausführungsform;
- Fig. 15: eine Aufsicht auf das erste Rotorblech von Fig. 2 in einer vierten Ausführungsform;
- Fig. 16: eine Aufsicht auf ein zweites Rotorblech und ein darunter liegendes erstes Rotorblech gemäß Fig. 15; und
- Fig. 17: eine Aufsicht gemäß Fig. 16 mit Veranschaulichung der Lage von zweiten Ausnehmungen.

In der nachfolgenden Beschreibung beziehen sich die Begriffe links, rechts, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

### Grundaufbau eines Innenläufermotors

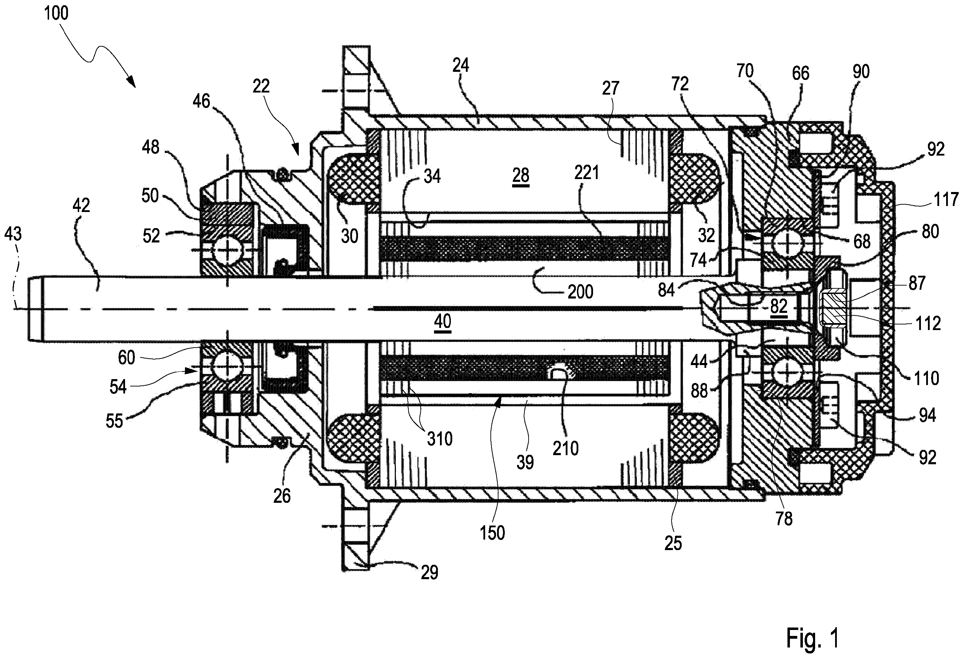

Fig. 1 zeigt einen mit einem Gehäuse 22 versehenen Elektromotor 100, der bevorzugt nach Art eines elektronisch kommutierten Innenläufermotors ausgebildet ist. Dieser weist einen in dem Gehäuse 22 angeordneten Außenstator 28 sowie einen drehbeweglich in dem Außenstator 28 angeordneten Innenrotor 150 auf. Dieser ist durch einen magnetisch wirksamen Luftspalt vom Außenstator 28 getrennt.

Das Gehäuse 22 weist beispielhaft ein zylindrisches Gehäuseteil 24, ein A-Lagerschild 26 und einen Befestigungsflansch 29 auf. In dem zylindrischen Gehäuseteil 24 ist ein Statorkern 27 (englisch: stator core) des Außenstators 28 angeordnet, und die Wickelköpfe des Statorkerns 27 sind mit den Bezugszeichen 30 und 32 angedeutet. Der Statorkern 27 ist als Blechpaket 27 mit einer Mehrzahl von - nur schematisch angedeuteten - Blechen bzw. Blechlamellen ausgebildet und wird nachfolgend zur besseren Verständlichkeit der Beschreibung als "Statorblechpaket 27" bezeichnet. Dieses Statorblechpaket 27 kann in einen Wickel- bzw. Isolierkörper 25 eingebettet sein, der z.B. nach Art einer Kunststoffumspritzung ausgebildet sein kann.

Darüber hinaus hat der Außenstator 28 eine Innenausnehmung 34, in der ein mit mindestens einem und bevorzugt einer Mehrzahl (z.B. 2, 4, 6, 8) von Rotormagneten 221 versehener Rotorkern 200 (englisch: rotor core) des Innenrotors 150 angeordnet ist. Dieser Rotorkern 200 ist in den Ausführungsbeispielen als Blechpaket mit einer Mehrzahl von Blechen bzw. Blechlamellen 310 ausgebildet, so dass es nachfolgend zur besseren Verständlichkeit der Beschreibung als "Rotorblechpaket 200" bezeichnet wird. Es weist mindestens eine und bevorzugt eine Mehrzahl von ersten Taschen 210 zur Aufnahme der Rotormagneten 221 auf, in welchen die Rotormagneten 221 angeordnet sind. Diese sind gemäß einer Ausführungsform Permanentmagnete.

Das Rotorblechpaket 200 ist auf einer Rotorwelle 40 angeordnet, welche bevorzugt in das Rotorblechpaket 200 eingepresst ist. Die Rotorwelle 40 hat ein freies, äußeres Antriebsende 42 und ein inneres Wellenende 44 und ist zu einer Drehung um eine Drehachse 43 ausgebildet.

Für die Rotorwelle 40 ist im A-Lagerschild 26 eine Dichtung 46 vorgesehen. Ferner befindet sich dort eine Ausnehmung 48, in der ein Führungsglied 50 für einen Außenring 55 eines Wälzlagers 54 befestigt ist. Ein Innenring 60 dieses Wälzlagers 54 ist im Bereich des Antriebsendes 42 um die Rotorwelle 40 herum angeordnet, bevorzugt aufgepresst.

Das innere Wellenende 44 der Rotorwelle 40 ist in einem B-Lagerschild 66 angeordnet, welches an einem dem A-Lagerschild 26 gegenüberliegenden, offenen Ende des zylindrischen Gehäuseteils 24 befestigt ist. Das B-Lagerschild 66 hat eine mit einer Ringschulter 78 versehene Ausnehmung 68 für einen Außenring 70 eines Wälzlagers 72, dessen Innenring 74 auf dem Wellenende 44 befestigt ist. Hierzu hat die Rotorwelle 40 einen Ringbund 88, mit dem sie gegen eine - in Fig. 1 linke - Seite des Innenrings 74 anliegt. Gegen dessen - in Fig. 1 rechte - Seite liegt ein z.B. aus Messing ausgebildetes Formstück 80 an, welches durch einen Senkkopf 110 einer Senkkopfschraube 82 in Richtung zur Rotorwelle 40 gepresst wird und etwa ringförmig ausgebildet ist. Die Schraube 82 ist in ein Innengewinde 84 des Wellenendes 44 eingeschraubt und presst dadurch das Formstück 80 in Richtung des Innenrings 74. Zum sicheren Einspannen des Außenrings 70 des Wälzlagers 72 dient ein bevorzugt flaches, ringförmiges Teil 90, welches durch mehrere gleichmäßig verteilte Schrauben 92, z.B. drei Schrauben 92, an seiner äußeren Peripherie am B-Lagerschild 66 befestigt ist und mit seiner radial inneren Peripherie 94 gegen den Außenring 70 anliegt und diesen - in Fig. 1 nach links - gegen die Schulter 78 presst.

In einer Ausnehmung 87 des Schraubenkopfs 110 ist bevorzugt ein Steuermagnet 112 befestigt. Dieser ist z.B. auf seiner - in Fig. 1 rechten - Seite mit einem Magnetisierungsmuster versehen und dient zur Steuerung von magnetoresistiven Widerständen, welche an einem Gehäusedeckel 117 angeordnet sind und zur Erfassung einer jeweiligen Drehstellung des Innenrotors 150 dienen, um Form und Kommutierung von Motorströmen im Außenstator 28 exakt steuern zu können. Der Gehäusedeckel 117 ist am B-Lagerschild 66 befestigt und dient zur bevorzugt dichten Abschließung des Gehäuses 22.

Es sei noch darauf hingewiesen, dass der oben beschriebene Elektromotor 100 nicht nur als elektronisch kommutierter Innenläufermotor bezeichnet werden kann, sondern in verschiedener Weise bezeichnet werden kann. Z.B. kann der Elektromotor 100 auch als permanent erregte Synchron-Innenläufermaschine, oder als elektronisch kommutierter Motor, oder als Elektromotor mit permanentmagnetischer Erregung bezeichnet werden.

Der Elektromotor 100 kann auch anders aufgebaut sein, und insbesondere bei sehr kleinen Elektromotoren 100 können andere Lager und eine andere Montage der Lager verwendet werden, beispielsweise eingespritzte Lager.

### Rotorblechpaket mit Klemmgliedern

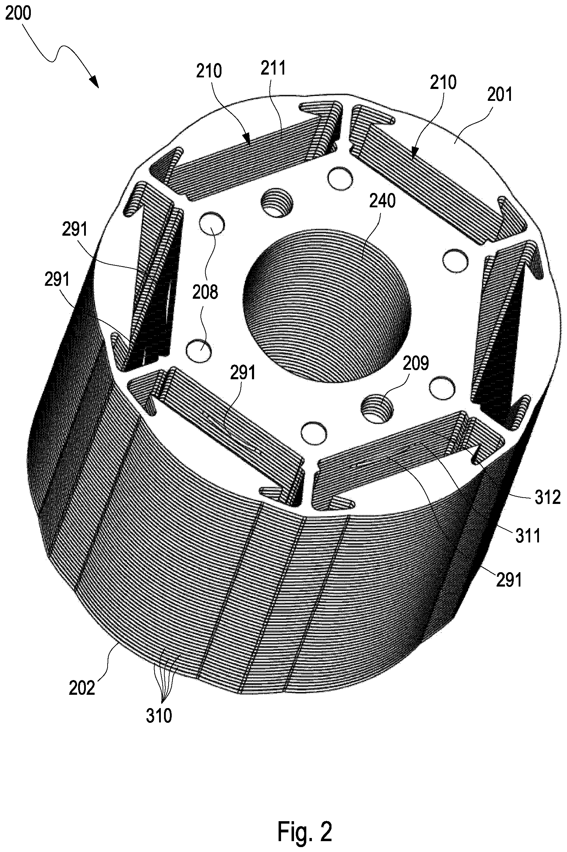

**Fig. 2** zeigt das Rotorblechpaket 200 des Innenrotors 150 von Fig. 1 in raumbildlicher Darstellung. Das Rotorblechpaket 200 hat ein erstes axiales Ende 201 und ein dem ersten axialen Ende 201 gegenüberliegendes zweites axiales Ende 202. Es sind sechs Taschen 210 für die Anordnung der Rotormagneten 221 (vgl. Figur 1) vorgesehen. Das Rotorblechpaket 200 weist Rotorbleche 310 auf, und diese weisen zur Bildung der Taschen 210 erste Ausnehmungen 211 auf. Zentral ist eine Durchgangsöffnung 240 zur Aufnahme der Rotorwelle 40 von Fig. 1 ausgebildet. In den Taschen 210 sind Klemmglieder 291 vorgesehen, welche in die Taschen 210 hineinragen. In der linken Tasche sind zwei Klemmglieder 291 zu sehen.

Die Rotorbleche 310 des Rotorblechpakets 200 weisen erste Rotorbleche 311 und zweite Rotorbleche 312 auf, wobei die Klemmglieder 291 an den ersten Rotorblechen 311 vorgesehen sind.

Bevorzugt weisen die Rotorbleche 310 mindestens eine Zentrierindex-Ausnehmung 209 auf, um eine vorgegebene Anordnung der Rotorbleche 310 zu ermöglichen, insbesondere für die Zentrierung des Rotorblechpakets 200.

Auf der ersten axialen Seite 201 sind Vertiefungen 208 angedeutet, welche durch eine Verprägung der Rotorbleche 310 miteinander erzeugt sind. Durch diese Verprägungen werden die Rotorbleche 310 bevorzugt miteinander verbunden.

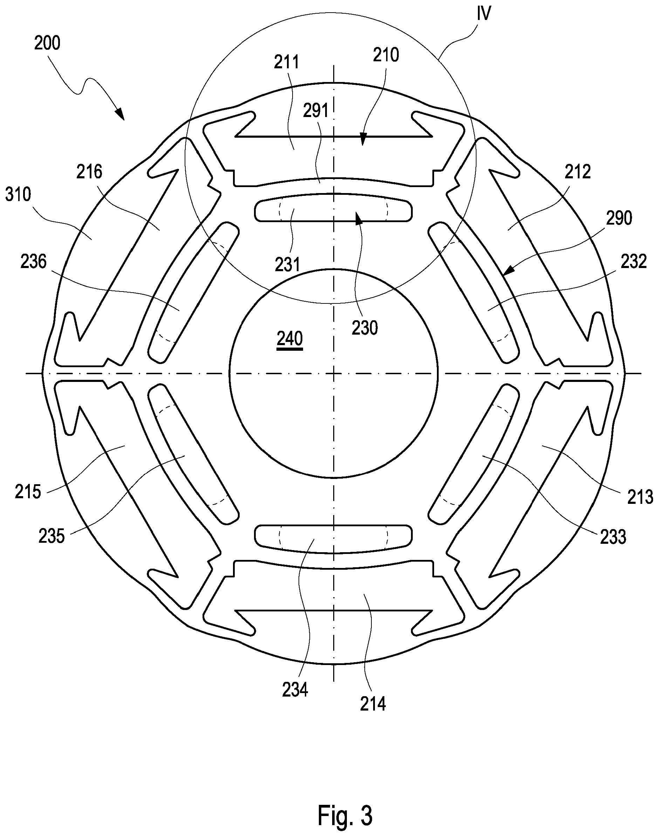

Die Mehrzahl von Ausnehmungen 211 und die Durchgangsöffnung 240 zur Aufnahme einer Welle sowie gegebenenfalls weitere Ausnehmungen wie die zweiten Ausnehmungen 230 von Fig. 3 können durch Ausstanzen oder durch Laserschneiden ausgebildet werden. Die Blechlamellen 310 können zur Ausbildung des Rotorblechpakets 200 auf beliebige Art und Weise aneinander befestigt sein, z.B. durch Verschweißen und/oder Stanzen.

**Fig. 3** zeigt das erste Rotorblech 311 des Rotorblechpakets 200 von Fig. 2. Das Rotorblechpaket 200 ist mit einer Mehrzahl von ersten Ausnehmungen 211-216 zur Aufnahme einer Mehrzahl von Rotormagneten 221 versehen, wobei die Mehrzahl von ersten Ausnehmungen 211-216 illustrativ sechs Ausnehmungen 211, 212, 213, 214, 215, 216 umfasst. Es können beispielsweise auch 2, 4, 8 oder mehr erste Ausnehmungen 211 vorgesehen werden. In jeder ersten Ausnehmung 211 wird bevorzugt genau ein Rotormagnet 221 angeordnet, es kann aber auch eine Mehrzahl angeordnet werden. Die zugeordnete Anzahl von Statorpolen ist abhängig vom Motortyp (einphasig oder dreiphasig). Jede der ersten Ausnehmungen 211 nimmt jeweils einen Rotormagneten der Mehrzahl von Rotormagneten 221 auf, beispielsweise die erste Ausnehmung 211 den Rotormagneten 221. Das Rotorblechpaket 200 weist zudem eine Mehrzahl von zweiten Ausnehmungen 230 auf, wobei die Mehrzahl von zweiten Ausnehmungen 230 illustrativ sechs Ausnehmungen 231, 232, 233, 234, 235, 236 umfasst. Die zweiten Ausnehmungen 230 sind jeweils in radialer Richtung benachbart zu den korrespondierenden ersten Ausnehmungen 211 bis 216. So ist beispielsweise die erste Ausnehmung 211 in radialer Richtung benachbart zur zweiten Ausnehmung 231 usw.

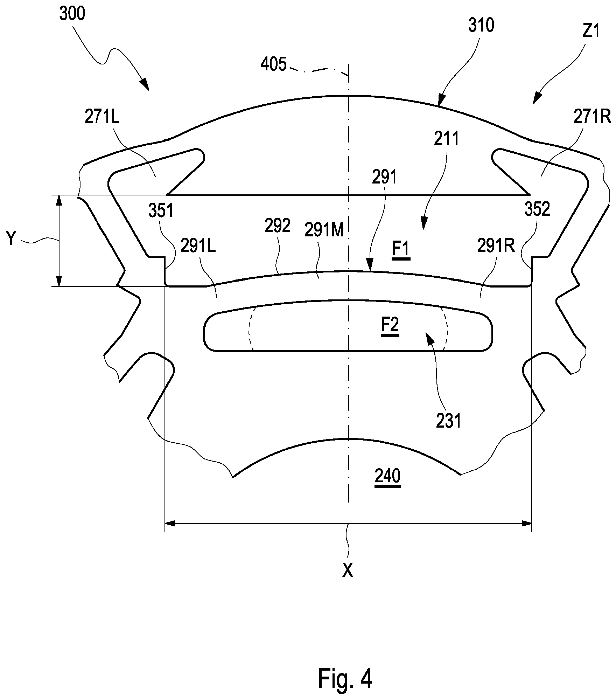

In den zweiten Ausnehmungen 230 bzw. 231 bis 236 ist eine alternative Ausführungsform mit geringerer Winkelerstreckung durch gestrichelte Linien dargestellt. Die zweiten Ausnehmungen entsprechend der alternativen Ausführungsform erstrecken sich also nur innerhalb der gestrichelten Linien. In der alternativen Ausführungsform sind die zweiten Ausnehmungen 230 also kleiner. In gleicher weise sind in Fig. 4, Fig. 9, Fig. 10, Fig. 11, Fig. 12 und Fig. 14 schematisch alternative Ausführungsformen mit bevorzugter geringerer Winkelerstreckung durch gestrichelte Linien dargestellt.

Zwischen der Mehrzahl von ersten Ausnehmungen 211-216 und der Mehrzahl von zweiten Ausnehmungen 230 ist eine Mehrzahl von federnden stegförmig ausgebildeten Klemmgliedern 290 ausgebildet, wobei bevorzugt jeder ersten Ausnehmung 211-216 mindestens eine zweite Ausnehmung 230 zugeordnet ist, besonders bevorzugt genau eine zweite Ausnehmung 230. Die Klemmglieder 290 sind bevorzugt als Bereiche des Rotorblechpakets 200 ausgebildet. Hierbei ist jeder der ersten Ausnehmungen 211, 212, 213, 214, 215, 216 jeweils ein stegförmiges Klemmglied 290 zugeordnet. Zwecks Übersichtlichkeit und Einfachheit der Zeichnung ist lediglich das der Ausnehmung 211 zugeordnete Klemmglied mit dem Bezugszeichen 291 gekennzeichnet, welches den zugeordneten Rotormagneten 221 nach dessen Einbau mit einer radial nach außen wirkenden Federkraft beaufschlagt.

Gemäß der ersten Ausführungsform ist die Mehrzahl von Klemmgliedern 290 im Bereich zwischen der Mehrzahl von zweiten Ausnehmungen 230 und der zugeordneten Mehrzahl von ersten Ausnehmungen 211-216 ausgebildet. Dementsprechend ist das Klemmglied 291 beispielhaft zwischen der Öffnung 231 und der Ausnehmung 211 ausgebildet.

Es sind jedoch auch Ausführungsformen möglich, bei denen die erste Ausnehmung 211 im Bereich zwischen der Durchgangsöffnung 240 und der zweiten Ausnehmung 231 angeordnet ist, die zweite Ausnehmung 231 also in radialer Richtung weiter außen liegt als die erste Ausnehmung 211.

Beispielhaft beträgt der Durchmesser des Rotorblechpakets 22 mm, die Erstreckung der Magneten 221 in radialer Richtung 1,9 mm und in tangentialer Richtung 7,8 mm. Die radiale Erstreckung der zweiten Ausnehmungen 230 im fertig montierten Zustand beträgt ca. 0,8 mm. Die Blechstärke der Bleche beträgt 0,35 mm.

**Fig. 4** zeigt einen vergrößerten Ausschnitt 300 des ersten Rotorblechs 311 von Fig. 3, wobei das Rotorblech 311 in einem entspannten Zustand Z1 ohne eingeschobenen Rotormagnet dargestellt ist.

Die erste Ausnehmung 211 ist zur Aufnahme eines Rotormagneten 221 ausgebildet. Der Rotormagnet 221 weist eine Erstreckung X in tangentialer Richtung und eine Erstreckung Y in radialer Richtung auf. Die Ausnehmung 211 weist bevorzugt Absätze 351 und 352 auf, die den Rotormagneten in tangentialer Richtung fixieren bzw. dessen Bewegung in tangentialer Richtung begrenzen. Der Abstand der Absätze 351 und 352 voneinander entspricht bevorzugt im Wesentlichen der Erstreckung X in tangentialer Richtung des Rotormagneten 221. Eine Ausdehnung der ersten Ausnehmung 211 in radialer Richtung entspricht bereichsweise der Erstreckung Y des Rotormagneten 221 in radialer Richtung.

Seitlich hat die erste Ausnehmung 211 bevorzugt einen ersten Bereich 271L und einen zweiten Bereich 271R, die nicht durch den Rotormagneten 221 ausgefüllt werden. Der erste Bereich 271L und der zweite Bereich 271R führen dazu, dass die Stege zwischen den ersten Ausnehmungen 211 - 216 dünner werden. Hierdurch wird das Nutrucken vermindert. Es sind aber auch Ausführungsformen ohne den ersten Bereich 271L und den zweiten Bereich 271R möglich, wobei die Absätze 351, 352 dann bevorzugt bis zur radial äußeren Wand der ersten Ausnehmung 211 verlängert sind.

Eine Erstreckung der zweiten Ausnehmung 231 in tangentialer Richtung beträgt bevorzugt mindestens 40 % der Erstreckung X des Rotormagneten 221 in tangentialer Richtung. In einer anderen Ausführungsform beträgt die Erstreckung der zweiten Ausnehmung 231 in tangentialer Richtung mindestens 50 % der Erstreckung X des Rotormagneten 221 in tangentialer Richtung, oder sogar mindestens 66 % der Erstreckung X des Rotormagneten 221 in tangentialer Richtung. In weiteren Ausführungsformen, bei denen die zweite Ausnehmung 231 in radialer Richtung weiter außen liegt als die erste Ausnehmung 211, kann die Erstreckung der zweiten Ausnehmung 231 in tangentialer Richtung sogar gleich groß oder größer als die Erstreckung X des Rotormagneten 221 in tangentialer Richtung sein. Die Erstreckung der zweiten Ausnehmung 231 in tangentialer Richtung ist bevorzugt so gewählt, dass die jeweils benachbarten zweiten Ausnehmungen zumindest teilweise beabstandet sind, um eine gute Federwirkung zu erzielen. Die maximale tangentiale Erstreckung ist daher abhängig von der Geometrie des Rotorkerns 200 und der Anordnung der zweiten Ausnehmungen 231 relativ zu den erste Ausnehmungen 211.

Das Klemmglied 291 hat einen ersten Endabschnitt 291L und einen zweiten Endabschnitt 291R, welche jeweils mit dem übrigen Bereich des Rotorblechs 311 verbunden sind, wobei zwischen dem ersten Endabschnitt 291L und dem zweiten Endabschnitt 291R ein mittlerer Abschnitt 291M vorgesehen ist.

In der in Fig. 4 dargestellten Ausführungsform weisen die erste Ausnehmung 211 und die zweite Ausnehmung 231 eine gemeinsame Mittelachse 405 auf, die durch den Mittelpunkt des Rotorblechs 310 verläuft. Die Mittelpunkte beider Ausnehmungen liegen also auf einer Linie, die durch den Mittelpunkt des Rotorblechs 310 verläuft. Beide Ausnehmungen sind spiegelsymmetrisch bezüglich der Mittelachse 405, und ihre Spiegelachsen fallen in Form der Mittelachse zusammen. Es sind jedoch auch Ausführungsformen denkbar, bei denen die Mittelpunkte der ersten Ausnehmung 211 und der zweiten Ausnehmung 231 in tangentialer Richtung gegeneinander verschoben sind. Ebenso sind Ausführungsformen denkbar, bei denen die zweite Ausnehmung 231 nicht spiegelsymmetrisch ausgebildet ist. Auch Ausführungsformen mit einer Kombination der genannten Merkmale sind möglich.

Die Rotormagnete 221 sind aus Herstellungsgründen bevorzugt im Wesentlichen quaderförmig, sie können aber auch gekrümmt ausgebildet werden.

Zwischen der ersten Ausnehmung 211 und der zweiten Ausnehmung 231, die in radialer Richtung benachbart sind, ist ein federndes stegförmiges Klemmglied 291 ausgebildet. In der abgebildeten Ausführungsform erstreckt sich das Klemmglied 291 von der ersten Ausnehmung 211 bis zur zweiten Ausnehmung 231. Wie in Fig. 4 erkennbar, weist das Klemmglied 291 eine lokale Ausbauchung 292 in radialer Richtung auf. Diese Ausbauchung 292 verringert lokal die radiale Erstreckung der ersten Ausnehmung 211, die im Bereich der lokalen Ausbauchung 292 kleiner als die radiale Erstreckung Y des Rotormagneten 221 ist. In der in Fig. 4 dargestellten Ausführungsform ist das Klemmglied 291 in radialer Richtung nach außen gekrümmt. Auch die in radialer Richtung weiter außen liegende Begrenzung der zweiten Ausnehmung 231 ist radial nach außen gekrümmt.

Beim Einbringen des Rotormagneten 221 in die Ausnehmung 211 wird das Klemmglied 291 in radialer Richtung auf das Zentrum des Blechpakets 200 hin elastisch deformiert, so dass eine Rückstellkraft F erzeugt wird, die gegen die radial innere Seite des Rotormagneten 221 wirkt und sie mit einer radial nach außen wirkenden Federkraft beaufschlagt. Dadurch wird der Rotormagnet 221 in radialer Richtung in der Ausnehmung 211 fixiert bzw. verklemmt. In der dargestellten Ausführungsform ist das Klemmglied 291 dazu ausgebildet, den Rotormagneten 221 in der ersten Ausnehmung 211 auf der radial inneren Seite des Rotormagneten 221 nur in einem Teilbereich zu verklemmen. Es sind jedoch auch Ausführungsformen möglich, bei denen der Rotormagnet 221 auf der radial inneren Seite über seine ganze Erstreckung X verklemmt wird, insbesondere auch bei zweiten Ausnehmungen 231, welche außerhalb der ersten Ausnehmungen 211 vorgesehen sind.

Für Ausführungsformen, bei denen die zweite Ausnehmung 231 in radialer Richtung weiter außen liegt als die erste Ausnehmung 211 gelten die oben beschriebenen Zusammenhänge analog, aber spiegelverkehrt, d.h. das Klemmglied 291 ist in radialer Richtung nach innen gekrümmt bzw. ausgebaucht und wirkt auf die radial äußere Seite des Rotormagneten 221.

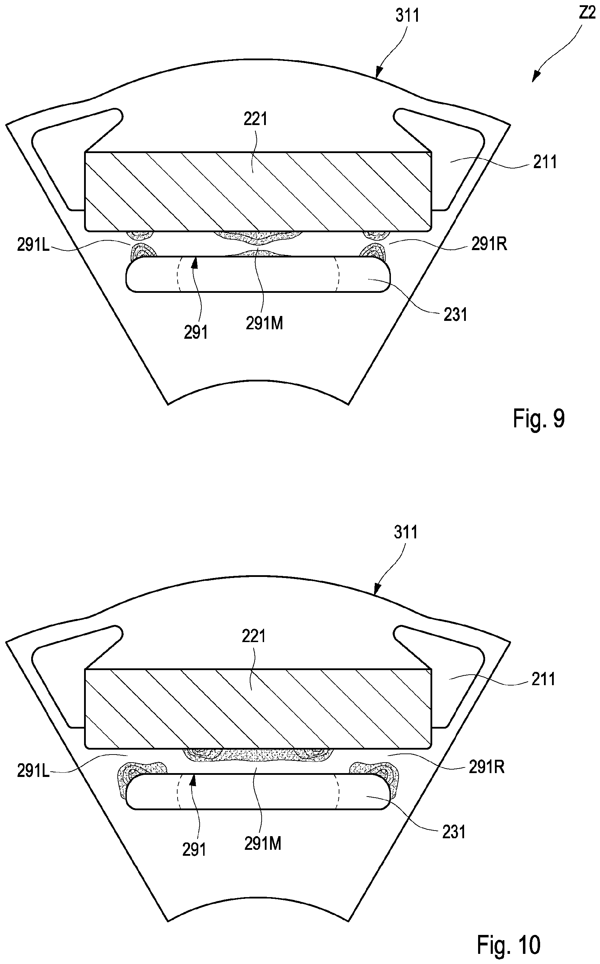

Im entspannten Zustand Z1 hat die erste Ausnehmung 211 eine erste Fläche F1 und die zweite Ausnehmung 231 eine zweite Fläche F2. Beim Einschieben des Rotormagneten, wie es in Fig. 9 gezeigt ist, geht das Klemmglied 291 in einen gespannten Zustand Z2 über, bei dem die erste Fläche F1 größer und die zweite Fläche F2 kleiner wird. Anders ausgedrückt ist das Verhältnis der ersten Fläche F1 der ersten Ausnehmung 211 zur zweiten Fläche F2 der zweiten Ausnehmung 231 im entspannten Zustand Z1 kleiner als im gespannten Zustand. Hierdurch wird bei Einführung eines zugeordneten Rotormagneten 221 in die erste Ausnehmung 211 das Klemmglied 291 zur zweiten Ausnehmung 231 hin gespannt, und das Klemmglied 291 beaufschlagt hierdurch den zugeordneten Rotormagneten 221 zur ersten Ausnehmung 211 hin mit einer Kraft, um so den zugeordneten Rotormagneten 221 in der Tasche 210 zu halten.

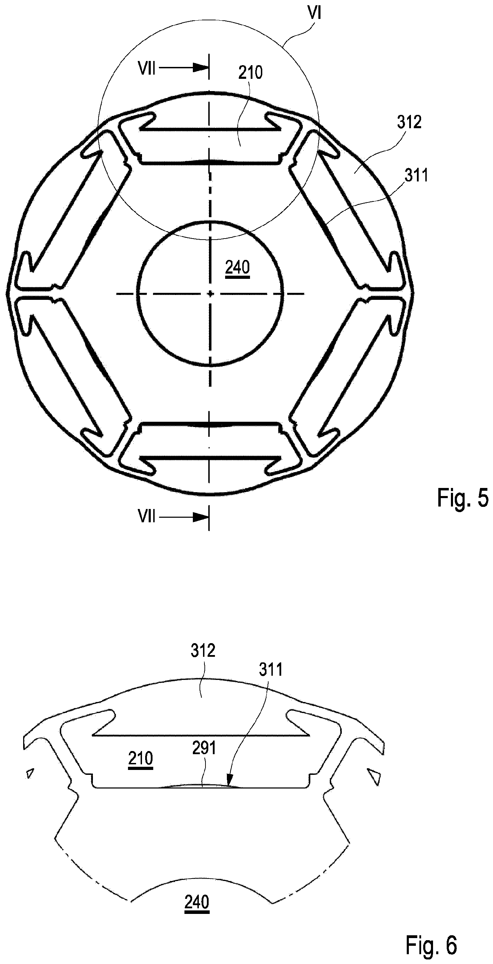

**Fig. 5** zeigt in einer Draufsicht ein zweites Rotorblech 312 und ein darunter angeordnetes erstes Rotorblech 311, und **Fig. 6** zeigt einen vergrößerten Ausschnitt. Das erste Rotorblech 311 hat eine erste Kontur und das zweite Rotorblech 312 eine zweite Kontur. Die Kontur des ersten Rotorblechs 311 ragt in die Tasche 210 hinein, im Bereich des Klemmglieds 291 des ersten Rotorblechs 311. Hierdurch kann das erste Rotorblech 311 beim Einpressen eines Rotormagneten 221 in die Tasche 210 nach innen Federn und durch diese Verspannung einen Druck auf den Rotormagneten 221 ausüben und diesen halten.

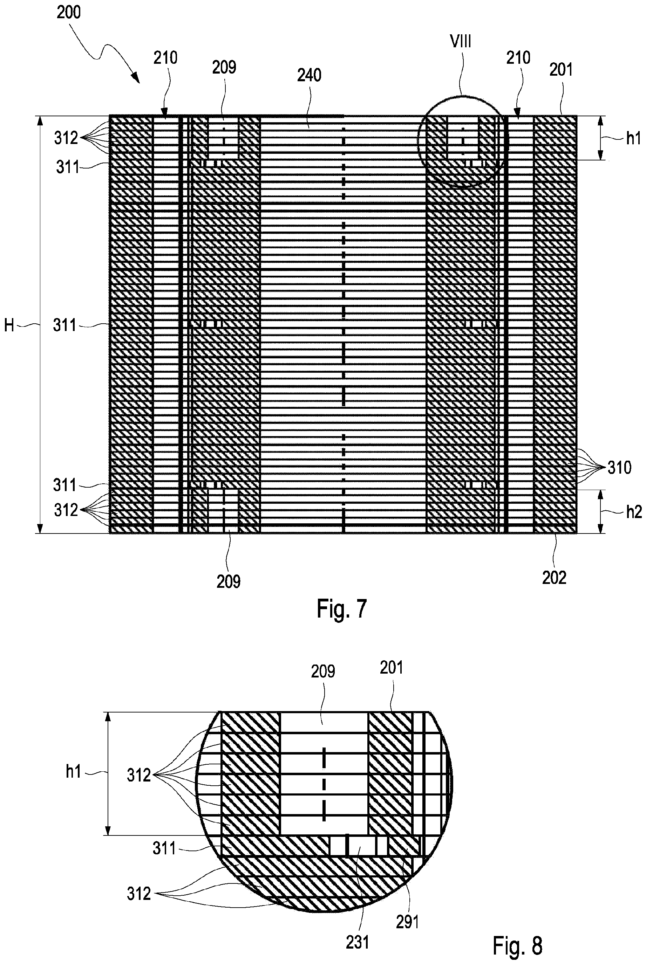

**Fig. 7** zeigt in einem Längsschnitt das Rotorblechpaket 200 von Fig. 2, und **Fig. 8** eine vergrößerte Ansicht eines Ausschnitts VIII von Fig. 7.

Die Zentrierindex-Ausnehmungen 209 verlaufen - sofern sie überhaupt vorgesehen sind - bevorzugt nicht vollständig durch das Rotorblechpaket 200 hindurch, da dies zu einer unnötigen Schwächung des magnetischen Flusses führen würde.

Das Rotorblechpaket 200 hat drei erste Rotorbleche 311. Es ist vorteilhaft, nicht nur erste Rotorbleche 311 zu verwenden, da durch die zweiten Ausnehmungen 231 ein magnetischer Widerstand für den magnetischen Fluss entsteht, der die Leistung des Motors verringert.

Zwischen dem oberen ersten Rotorblech 311 und dem ersten axialen Ende 201 des Rotorblechpakets 200 sind sechs zweite Rotorbleche 312 angeordnet, und zwischen dem unteren ersten Rotorblech 311 und dem zweiten axialen Ende 202 des Rotorblechpakets 200 sind ebenfalls sechs zweite Rotorbleche 312 vorgesehen. Untersuchungen haben ergeben, dass es vorteilhaft ist, am ersten axialen Ende 201 und am zweiten axialen Ende 202 jeweils mindestens fünf zweite Rotorblech 312 (ohne Klemmglieder) vorzusehen, da dies zu einer Geräuschreduzierung führt.

Es ist für die Geräuschreduzierung vorteilhaft, die ersten Rotorbleche 311 im Blechpaket 200 symmetrisch anzuordnen. Bei dem dargestellten Rotorblechpaket 200 mit 57 Rotorblechen 310 können beispielsweise an 7. Stelle, an 29. Stelle und an 51. Stelle erste Rotorbleche 311 vorgesehen werden, wobei eine Abweichung in der Größenordnung +/- 1 die Symmetrie nicht maßgeblich stört.

Das beispielhafte Rotorblechpaket 200 hat eine axiale Höhe H = 20 mm, eine Gesamthöhe h1, h2 der sechs zweiten Rotorbleche 312 am ersten axialen Ende 201 und zweiten axialen Ende 202 von h1 = 2,1 mm bzw. h2 = 2,15 mm und einen Durchmesser von 22,5 mm.

Die Klemmglieder 291 ragen im entspannten Zustand um 0,125 mm in die Taschen 210 hinein, sie stehen also in diesem Bereich über die Kontur der zweiten Rotorbleche 312 über bzw. decken die Kontur der ersten Ausnehmungen 211 der zweiten Rotorbleche 312 teilweise ab.

Beim Einpressen der Rotormagnete 221 in die Tasche 210 können die Klemmglieder 291 in die zugeordnete zweite Ausnehmung 231 hinein federn und so einen Druck auf den Rotormagneten 221 senkrecht zu Achse bewirken.

Während die Verformung des Klemmglieds 291 bevorzugt weitgehend elastisch erfolgt, kann auch in Bereichen sehr starker Verformung eine plastische Verformung auftreten. Nach einer - üblicherweise unerwünschten - Entfernung des Rotormagneten 221 wird das Klemmglied 291 daher möglicherweise nicht mehr vollständig in die entspannte Lage zurück federn.

**Fig. 9** zeigt einen Ausschnitt des ersten Rotorblechs 311 von Fig. 3 mit dem von dem Klemmglied 291 in der Ausnehmung 211 verklemmten Rotormagneten 221. Durch das Einpressen befindet sich das Rotorblech 311 in einem gespannten Zustand Z2, und der Rotormagnet 221 kann dauerhaft in der Öffnung 211 befestigt werden. Das Klemmglied 291 ist durch den Rotormagneten 221 verformt, so dass die Ausdehnung der ersten Ausnehmung 211 in radialer Richtung über die gesamte tangentiale Erstreckung X des Rotormagneten 221 der Erstreckung Y des Rotormagneten 221 in radialer Richtung entspricht oder geringfügig größer ist. In Fig. 9 ist die durch den Rotormagneten 221 bewirkte plastische Dehnung des Klemmglieds 291 dargestellt. Wie aus Fig. 9 ersichtlich, beträgt die maximale plastische Dehnung etwa 11 %, liegt also deutlich unterhalb der Bruchdehnung des Blechs, die etwa 15 % beträgt. Die maximale Belastung tritt an den äußeren Endabschnitten 291L, 291R des Klemmglieds 291 in den an die zweite Ausnehmung 231 angrenzenden Bereichen auf. Die Belastung im mittleren Abschnitt 291M des Klemmglieds 291 auf der dem Rotormagneten 221 zugewandten Seite ist demgegenüber nur etwa halb so groß.

Durch die Deformation des Klemmglieds 291 wird eine Rückstellkraft F erzeugt, die gegen die radial innere Seite des Rotormagneten 221 wirkt und sie mit einer radial nach außen wirkenden Federkraft beaufschlagt. Das Klemmglied 291 ist in einer Ausführungsform dazu ausgebildet, den Rotormagneten 221 nur abschnittsweise mit der zugeordneten Klemmkraft F in der Ausnehmung 211 zu verklemmen, um eine Beschädigung des üblicherweise spröden Rotormagneten 221 zu vermeiden.

Bei der durch die gestrichelte Linie angedeuteten alternativen Ausführungsform der zweiten Ausnehmung 231 sieht die plastische Dehnung qualitativ entsprechend aus, wobei die äußeren Dehnungsbereiche entsprechend weiter innen auftreten.

**Fig. 10** zeigt den Ausschnitt aus Fig. 9 und die darin herrschende hydrostatische Spannungsverteilung. Es ist zu erkennen, dass im Mittelbereich des Klemmglieds 291 auf der dem Rotormagneten 221 zugewandten Seite eine Druckspannung und auf der vom Rotormagneten 221 abgewandten Seite, also der an die zweite Ausnehmung 231 angrenzende Seite, eine Zugspannung herrschen. Ebenso zeigt Fig. 10, dass In den äußeren Randbereichen des Klemmglieds 291 auf der dem Rotormagneten 221 zugewandten Seite eine Zugspannung und auf der vom Rotormagneten 221 abgewandten Seite eine Druckspannung herrschen. In den Bereichen des Klemmglieds 291 mit maximaler plastischer Dehnung herrscht also jeweils eine Druckspannung. Ein Materialbruch ist daher nicht zu befürchten. Die maximale Größe der plastischen Dehnung wird durch die Form bestimmt, beispielsweise durch den Radius bzw. die Krümmung an den äußeren Bereichen des Klemmglieds, sowohl radial innen als auch radial außen. Auch über die Form des Klemmglieds (gerade oder gekrümmt: unterschiedliche Dicken) und die Form (z.B. Breite) der zweiten Aussparung kann die maximale Dehnung beeinflusst werden und auch, ob diese in einem Bereich mit Zugspannung oder Druckspannung auftritt. Zur Optimierung kann man die Abänderung der Form des Blechs in ein Simulation einarbeiten und die Dehnung berechnen. So kann man herausfinden, ob eine Form besser als eine andere Form ist und ob weitere Abänderungen zu Verbesserungen führen.

Bei der durch die gestrichelte Linie angedeuteten alternativen Ausführungsform der zweiten Ausnehmung 231 sieht die hydrostatische Spannungsverteilung qualitativ entsprechend aus, wobei die äußeren Druckbereiche entsprechend weiter innen auftreten.

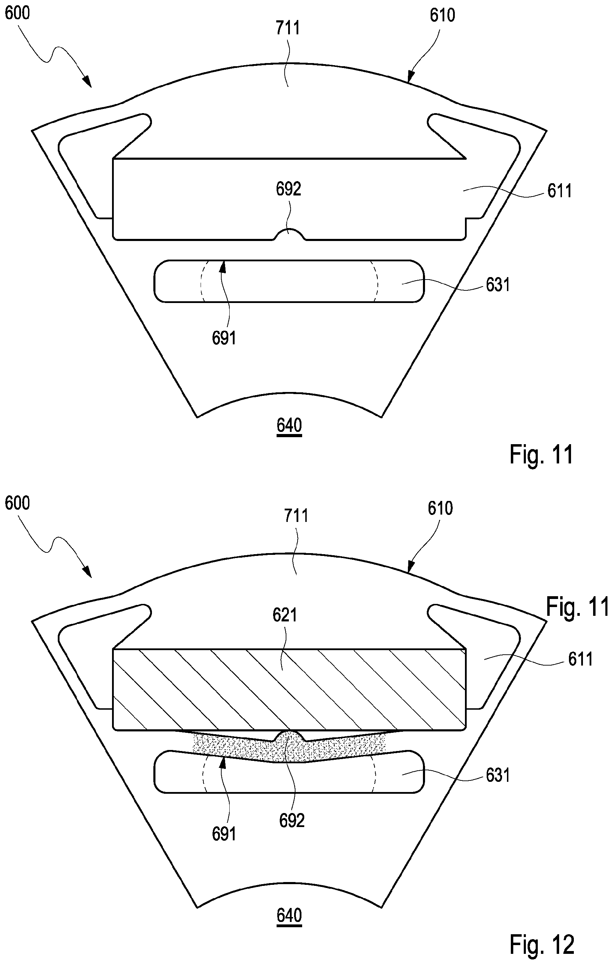

**Fig. 11** zeigt einen vergrößerten Ausschnitt einer zweiten Ausführungsform eines ersten Rotorblechs 711 für ein Rotorblechpaket 600. Die Ausnehmungen 611, 631 und die Durchgangsöffnung 640 können beispielsweise ausgestanzt oder mittels Laser geschnitten sein. Die Blechlamellen 610 können zur Ausbildung des Rotorblechpakets 600 auf beliebige Art und Weise aneinander befestigt sein, z.B. durch Verschweißen oder Stanzen. Alternativ hierzu kann anstelle der Mehrzahl von gestapelten Blechlamellen 610 beispielsweise auch Weicheisen oder ein anderes weichmagnetisches Material zur Ausbildung des Rotorblechpakets 600 Anwendung finden.

Der vergrößerte Ausschnitt des Blechpakets 600 verdeutlicht insbesondere das im Bereich zwischen der ersten Ausnehmung 611 und der zweiten Ausnehmung 631 angeordnete Klemmglied 691, in dessen Mittelteil auf der von der zweiten Ausnehmung 631 abgewandten Seite eine lokale Ausbauchung 692 vorhanden ist. Die Ausbauchung 692 verringert lokal die radiale Ausdehnung der ersten Ausnehmung 611, so dass diese im Bereich der Ausbauchung 692 kleiner als die radiale Erstreckung Y eines zugeordneten Rotormagneten 621 ist.

**Fig. 12** zeigt den Ausschnitt von Fig. 11 mit dem von dem Klemmglied 691 in der Ausnehmung 611 verklemmten Rotormagneten 621. Durch das Einpressen des Rotormagneten 621 ist das Klemmglied 691 ausgelenkt bzw. verformt.

Durch die Deformation des Klemmglieds 691 wird eine Rückstellkraft F erzeugt, die gegen die radial innere Seite des Rotormagneten 621 wirkt und sie permanent mit einer radial nach außen wirkenden Federkraft beaufschlagt. Das Klemmglied 691 verklemmt den Rotormagneten 621 nur im Bereich der Ausbauchung 692 mit der zugeordneten Klemmkraft F in der Ausnehmung 611.

Bei der durch die gestrichelte Linie angedeuteten alternativen Ausführungsform der zweiten Ausnehmung 231 sieht die Verformung qualitativ entsprechend aus, wobei die dargestellten äußeren verformten Bereiche nicht oder nur gering verformt sind, die inneren Bereiche dagegen mehr. Dies macht den Effekt der kleineren zweiten Ausnehmungen 231 gemäß der alternativen Ausführungsform deutlich.

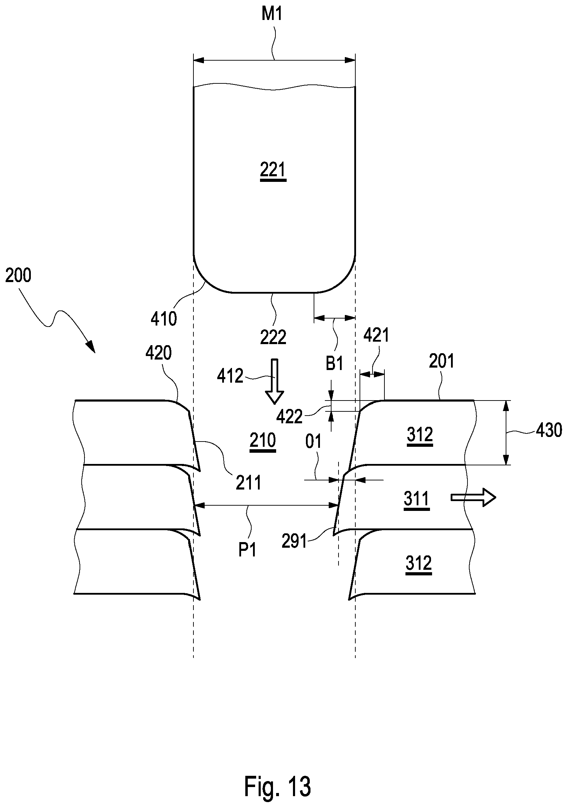

**Fig. 13** zeigt einen Längsschnitt durch das Rotorblechpaket 200. Bevorzugt hat der Rotormagnet 221 zumindest auf der Einführseite eine Schrägung bzw. Fase 410, um das Einführen 412 in die erste Ausnehmung 211 zu erleichtern bzw. die erforderliche maximale Einpresskraft für das Einpressen des Rotormagneten 221 und die Auslenkung 432 des Klemmglieds 291 zu verringern. Die Fase 410 kann beispielsweise durch Gleitschleifen für eine Mehrzahl von Rotormagneten 221 gleichzeitig erzeugt werden. Die zum Einpressen des Rotormagneten 221 erforderliche Kraft ist umso höher, je kleiner der Radius der geschliffenen Kante des Rotormagneten 221 bzw. die lokale Krümmung ist.

In einer Ausführungsform weist auch der Rand der ersten Ausnehmung 211 eine Fase 420 auf. Diese lässt sich bei der Herstellung des Rotorblechs 310 durch Kanteneinzug beim Stanzprozess erzeugen und ist durch die Breite des Stanzwerkzeugs variierbar. Die Einzugsbreite 421 beträgt bevorzugt zwischen 10 % und 40 % der Blechdicke 430, weiter bevorzugt etwa 30 % der Blechdicke 430. Die Einzugstiefe 422 beträgt bevorzugt zwischen 8 % und 30 % der Blechdicke 430, weiter bevorzugt etwa 20 % der Blechdicke 430. Der Kanteneinzug ist etwas übertrieben dargestellt.

Die Blechdicke 430 liegt bevorzugt im Bereich von 0,1 mm bis 3,0 mm, weiter bevorzugt im Bereich von 0,2 mm bis 0,5 mm, in den Ausführungsbeispielen beträgt sie bevorzugt 0,35 mm.

Beim Einpressen der Rotormagneten 221 kann die Presskraft überwacht werden, um so insbesondere zu locker sitzende Rotormagneten 221 zu erkennen und ggf. auszusondern.

Vorteilhaft ist eine Mindesteinpresskraft F_min = 2 N pro Klemmblech 311. Es kann auch eine Mindesteinpresskraft F_min = 4 N oder noch größer vorgegeben werden.

Schematisch sind von außen (erstes axiales Ende 201) nach innen gesehen ein zweites Rotorblech 312, anschließend ein erste Rotorblech 311 mit einem Klemmglied und anschließend wieder ein zweites Rotorblech 312 vorgesehen. Dies ermöglicht eine Auslenkung des Klemmglieds 291 durch den Rotormagneten 221, wobei die Auslenkung durch die benachbarten zweiten Rotorbleche 312 in einer Richtung senkrecht zur Achse des Rotorblechpakets 200 geführt wird.

Die Rotorbleche 311, 312 bilden das Rotorblechpaket 200 mit der mindestens einen Tasche 210 für den Rotormagneten 221. Der Rotormagnet 221 hat an einem axialen Ende 222 eine Fase 410 mit einer Einzugsbreite B1 in radialer Richtung. Der Rotormagnet 221 hat vor dem Einführen in die Tasche 210 in radialer Richtung ein maximales Übermaß O1 relativ zur Tasche, wobei gilt:
Das Verhältnis von B1 zu O1 ist im Bereich 1,5 .. 4,0.

Dieses Verhältnis ermöglicht ein gutes Einführen des Rotormagneten 221 in die Tasche, und er stößt nicht flach gegen ein Rotorblech 311, 312.

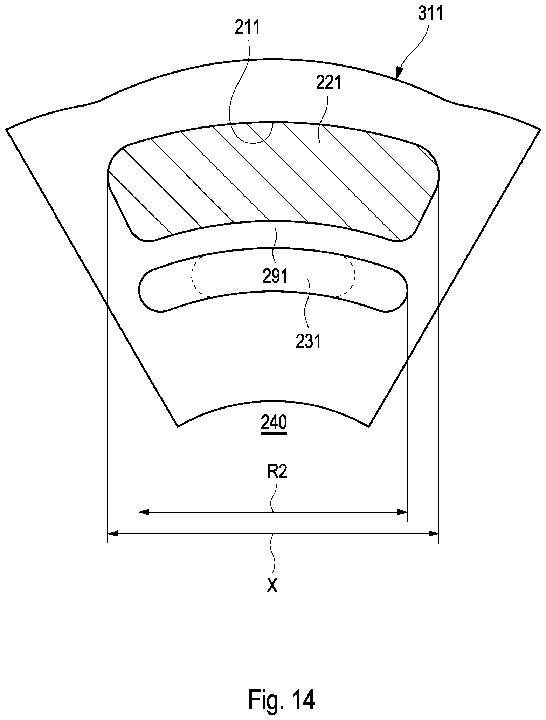

**Fig. 14** zeigt einen Ausschnitt einer weiteren Ausführungsform des ersten Rotorblechs 311. Der Rotormagnet 221 ist nicht quaderförmig ausgebildet, sondern er hat einen gekrümmten Querschnitt. Entsprechend ist auch das Klemmglied gekrümmt ausgebildet, wobei es im entspannten Zustand (ohne den Rotormagneten 221) noch mehr in die erste Ausnehmung 211 hinein ragt.

Analog zu Fig. 4 kann hier die Erstreckung X des Rotormagneten 221 in tangentialer Richtung und eine Erstreckung R2 der zweiten Ausnehmung 231 in tangentialer Richtung angegeben werden. Die Erstreckung R2 ist im Ausführungsbeispiel ähnlich groß wie die Erstreckung X, wobei R2 ungefähr 0,9 X beträgt.

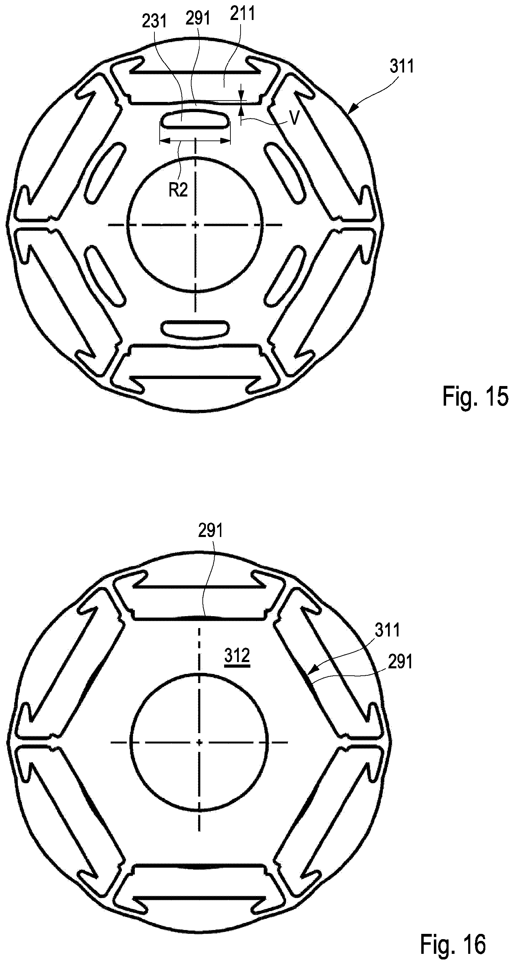

**Fig. 15** zeigt eine weitere Ausführungsform des ersten Rotorblechs 311, bei welchem die Kontur der zweiten Ausnehmungen 230 im Hinblick auf die auftretenden Spannungen und auf die geforderten Einpresskräfte für die Rotormagneten 221 verbessert wurde. Das Verhältnis der Erstreckung R2 der zweiten Ausnehmung 230 zur Erstreckung X der in das erste Rotorblech 311 einzupressenden Rotormagneten 221 (Erstreckung zwischen den Schultern, vgl. Fig. 4) beträgt ungefähr 0,5. Ein Verhältnis von mindestens 0,4 (entsprechend 40 %), bevorzugt mindestens 0,45 hat sich allgemein als vorteilhaft erwiesen. Ein Verhältnis von maximal 1,2, bevorzugt maximal 0,9, weiter bevorzugt maximal 0,7, hat sich als vorteilhaft erwiesen, wobei das Verhältnis bei einer Anordnung der zweiten Ausnehmung 230 radial außerhalb der ersten Ausnehmung 211 größer sein kann.

Das Klemmglied 291 ragt im entspannten Zustand im Ausführungsbeispiel mit ca. V = 0,15 mm in die erste Ausnehmung 211 hinein. Eine Vergrößerung führt zu einer stärkeren Klemmwirkung und Einpresskraft, und eine Verringerung zu einer geringeren Klemmwirkung und Einpresskraft. Hierdurch kann das Klemmglied 291 an die Erfordernisse angepasst werden.

**Fig. 16** zeigt ein erstes Rotorblech 311, welches von einem zweiten Rotorblech 312 abgedeckt wird. Das Klemmglied 291 wird größtenteils vom zweiten Rotorblech 312 abgedeckt, und hierdurch wird eine Verformung in axialer Richtung beim Einpressen des Rotormagneten verhindert oder weitgehend verringert.

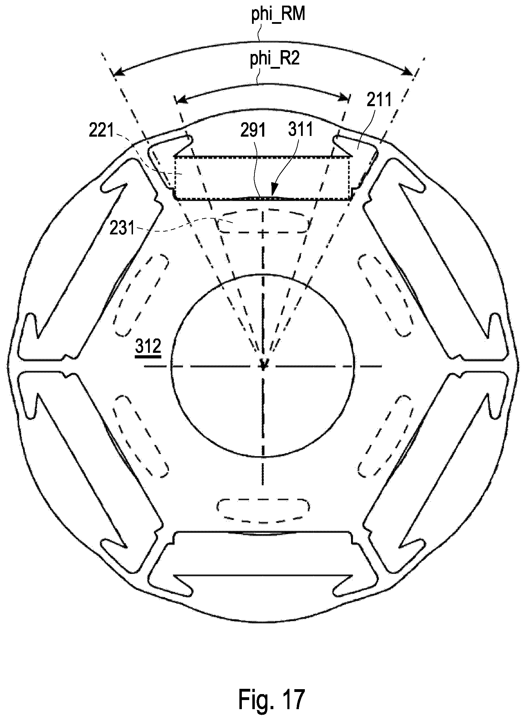

**Fig. 17** zeigt die Rotorbleche 311, 312 entsprechend Fig. 16, wobei die Lage des Rotormagneten 221 schematisch angedeutet ist. Während beispielsweise in Fig. 15 und Fig. 4 die Erstreckungen in tangentialer Richtung betrachtet wurden, werden in Fig. 17 die Winkelerstreckung phi_RM des Rotormagneten 221 und die Winkelerstreckung phi_R2 der zweiten Aussparung 230 betrachtet, wobei als Winkelerstreckung jeweils die maximale Winkelerstreckung betrachtet wird.

Im vorliegenden Fall betragen phi_RM = 55° und phi_R2 = 36°. Das Verhältnis phi_R2 / phi_RM beträgt somit 0,65.

Für das Verhältnis phi_R2 / phi_RM haben sich Werte im Bereich von 0,4 bis 0,8 als vorteilhaft erwiesen, weiter bevorzugt im Bereich von 0,5 bis 0,8. Diese Werte sind auch vorteilhaft für die anderen Ausführungsbeispiele.

Die in den Zeichnungen dargestellten und beschriebenen Ausführungsformen können wie folgt charakterisiert werden.

Ein Innenrotor 150 für einen Elektromotor 100 hat ein Rotorblechpaket 200; 600 mit einer Mehrzahl von Rotorblechen 310, welches Rotorblechpaket 200; 600 eine Mehrzahl von Taschen 210 aufweist, in welchen Taschen 210 jeweils ein Rotormagnet 221; 621 zumindest teilweise angeordnet ist, welche Rotorbleche erste Ausnehmungen 211; 611 zur Ausbildung der Taschen 210 aufweisen, welche Rotorbleche 310 mindestens ein erstes Rotorblech 311 aufweisen, welches erste Rotorblech 311 mindestens eine zweite Ausnehmung 231-236; 631 aufweist, welche zweite Ausnehmung 231-236; 631 einer ersten Ausnehmung 211-216; 611 zugeordnet ist, wobei zwischen der zweiten Ausnehmung 231-236; 631 und der zugeordneten ersten Ausnehmung 211-216; 611 ein federndes stegförmiges Klemmglied 291; 691 ausgebildet ist, welches Klemmglied 291; 691 durch den zugeordneten Rotormagneten 221, 621 zur zweiten Ausnehmung 231-236; 631 hin gespannt ist, und welches Klemmglied 291; 691 hierdurch den zugeordneten Rotormagneten 221; 621 zur ersten Ausnehmung 211-216; 611 hin mit einer Kraft beaufschlagt, um den zugeordneten Rotormagneten 221; 621 in der Tasche 210 zu halten. Das Verhältnis der Winkelerstreckung phi_R2 der zweiten Ausnehmung 230 zur Winkelerstreckung phi_RM des zugeordneten Rotormagneten 221 liegt im Bereich von 0,4 bis 0,8, bevorzugt im Bereich 0,5 bis 0,8. In diesem Bereich konnte besonders gut die Verteilung der Spannungen erreicht werden und gleichzeitig eine ausreichende Haltekraft erzeugt werden. Gezielte Untersuchungen mit der FEM-Methode (Finite Elemente Methode) haben ergeben, dass die Spannung im Rotorblech steigt, wenn das Verhältnis abnimmt, und dies kann zu einem Defekt beim Einschieben der Rotormagneten führen. Andererseits nimmt die Haltekraft für die Rotormagneten ab, wenn das Verhältnis zunimmt, und dies kann zu einem schlechten Halt des Rotormagneten führen, oder es müssen sehr viele Rotorbleche mit Klemmglied verwendet werden. Der Bereich von 0,4 bis 0,5 hat sich für sehr große Innenrotoren als vorteilhaft erwiesen. Für kleinere, mittlere und größere Innenrotoren ist der Bereich 0,5 bis 0,8 vorteilhaft, wobei bei einer optimierten Ausführungsform ein Wert von 0,65 besonders bevorzugt war.

Gemäß einer bevorzugten Ausführungsform ist die zweite Ausnehmung 231-236; 631 zur ersten Ausnehmung 211-216; 611 in radialer Richtung benachbart. Hierdurch kann das Klemmglied 291 gut in die zweite Ausnehmung in radialer Richtung einfedern.

Gemäß einer bevorzugten Ausführungsform trennt das Klemmglied 291 die erste Ausnehmung 211-216; 611 und die zweite Ausnehmung 231-236; 631 innerhalb des ersten Rotorblechs 311 vollständig voneinander. Dies erhöht die Stabilität des Klemmglieds 291 und ermöglicht einen größeren Spannungsaufbau.

Gemäß einer bevorzugten Ausführungsform haben die zweite Ausnehmung 231; 631 und die zugeordnete erste Ausnehmung 211; 611 eine gemeinsame Mittelachse. Hierdurch kann eine gleichmäßigere Spannungsverteilung im Klemmglied 291 erzielt werden.

Gemäß einer bevorzugten Ausführungsform beträgt die Erstreckung der zweiten Ausnehmung 231; 631 in tangentialer Richtung mindestens 40 % der Erstreckung des Rotormagneten 221; 621 in tangentialer Richtung, bevorzugt mindestens 45 %. Hierdurch kann eine gute Verteilung und eine Begrenzung der im Klemmglied 291 entstehenden Spannung erzielt werden.

Gemäß einer bevorzugten Ausführungsform weist das Klemmglied 291; 691 einen ersten Endabschnitt 291L und einen zweiten Endabschnitt 291R auf, welche jeweils mit dem übrigen Bereich des Rotorblechs 311 verbunden sind, wobei zwischen dem ersten Endabschnitt 291L und dem zweiten Endabschnitt 291R ein mittlerer Abschnitt 291M vorgesehen ist. Hierdurch wird das Klemmglied in das Rotorblech integriert, und es kann an beiden Enden als Teil des Rotorblechs mit dem Rotorblech zusammen wirken.

Gemäß einer bevorzugten Ausführungsform herrschen am Klemmglied 291; 691 durch die Spannung bzw. Auslenkung zur zweiten Ausnehmung 231-236; 631 hin im mittleren Abschnitt 291M des Klemmglieds 291; 691 zumindest bereichsweise auf der dem Rotormagneten 221 zugewandten Seite eine Druckspannung und auf der vom Rotormagneten 221 abgewandten Seite eine Zugspannung. Durch diese Anordnung der Druckspannung und Zugspannung kann eine Kraft auf den Rotormagneten erzeugt werden.

Gemäß einer bevorzugten Ausführungsform herrschen am Klemmglied 291; 691 durch die Spannung zur zweiten Ausnehmung 231-236; 631 hin im ersten Endabschnitt 291L und im zweiten Endabschnitt 291R des Klemmglieds 291; 691 auf der dem Rotormagneten 221 zugewandten Seite eine Zugspannung und auf der vom Rotormagneten 221 abgewandten Seite eine Druckspannung. Diese Anordnung der Spannungen ermöglicht einen guten Aufbau der entgegen gesetzten Spannungen im mittleren Bereich.

Gemäß einer bevorzugten Ausführungsform ist der mittlere Abschnitt 291M auf der der ersten Ausnehmung 211-216; 611 zugewandten Seite zumindest abschnittsweise konvex gekrümmt ausgebildet. Hierdurch kann auch im gespannten Zustand des Klemmglieds die Kraft zwischen dem Rotormagneten und dem Klemmglied aufrecht erhalten werden.

Gemäß einer bevorzugten Ausführungsform ist der mittlere Abschnitt 291M auf der der zweiten Ausnehmung 231-236; 631 zugewandten Seite zumindest abschnittsweise konkav gekrümmt ausgebildet ist. Hierdurch wird einem vollständigen Eindrücken des Klemmglieds in den zweiten Bereich entgegen gewirkt und es können größere Spannungen aufgebaut werden.

Gemäß einer bevorzugten Ausführungsform weist der mittlere Abschnitt 291M einen Vorsprung aufweist, welcher in die erste Ausnehmung 211-216; 611 hinein ragt. Dies ermöglicht eine konzentrierter Kraftausübung auf den Rotormagneten und damit einen höheren Anpressdruck.

Gemäß einer bevorzugten Ausführungsform weist der Rotormagnet 221; 621 eine dem Klemmglied 291; 691 zugewandte erste Seite auf, und das Klemmglied 291; 691 weist im gespannten Zustand eine Form auf, welche nicht exakt komplementär zur Form der ersten Seite ist, um hierdurch den Rotormagneten 221; 621 in der ersten Ausnehmung 211; 611 auf der ersten Seite nur in einem Teilbereich zu verklemmen.

Gemäß einer bevorzugten Ausführungsform erstreckt sich das Klemmglied 291; 691 von der ersten Ausnehmung 211; 611 bis zur zweiten Ausnehmung 231; 631. Es sind also keine weiteren Zwischenaussparungen vorgesehen.

Gemäß einer bevorzugten Ausführungsform weist der Rotorkern 200 eine Durchgangsöffnung 240 zur Aufnahme einer Welle 40 auf, und die zweite Ausnehmung 231 ist im Bereich zwischen der Durchgangsöffnung 240 und der zugeordneten ersten Ausnehmung 211 angeordnet. Hierdurch können die Rotormagneten nah am Außenumfang des Rotors angeordnet werden und hierdurch ein größerer magnetischer Fluss erzeugt werden.

Gemäß einer bevorzugten Ausführungsform weist das Klemmglied 291; 691 eine lokale Ausbauchung 292; 692 in radialer Richtung auf. Dies führt zu einer Erhöhung des Haltedrucks auf den Rotormagneten.

Erfindungsgemäß weist das erste Rotorblech 311 eine erste Kontur auf, und die Rotorbleche 310 weisen mindestens ein zweites Rotorblech 312 auf, welches zweite Rotorblech 312 eine zweite Kontur aufweist, wobei die zweite Kontur die erste Kontur im Bereich der zweiten Ausnehmung 231 zumindest bereichsweise abdeckt. Hierdurch ist im Bereich der zweiten Rotorbleche mehr Material vorhanden, und damit wird der magnetische Widerstand des Blechpakets insgesamt verringert.

Erfindungsgemäß deckt das zweite Rotorblech 312 das Klemmglied 291; 691 zumindest teilweise ab, um so bei einer Anordnung des zweiten Rotorblechs 312 an dem ersten Rotorblech 311 eine Bewegung des Klemmglieds 291; 691 des ersten Rotorblechs 311 in eine axiale Richtung zum zweiten Rotorblech 312 hin zu begrenzen, jedoch eine Bewegung des Klemmglieds 291; 691 in eine Richtung senkrecht zur axialen Richtung zuzulassen. Hierdurch wird die Gefahr eines axialen Abknickens des Klemmglieds verringert, und das Nachbar-Rotorblech dient als radiale Führung.

Gemäß einer bevorzugten Ausführungsform weist der Rotormagnet 221; 621 eine dem Klemmglied 291; 691 zugewandte erste Seite auf, und das Klemmglied 291; 691 des ersten Rotorblechs deckt die Kontur des zweiten Rotorblechs 312 teilweise ab, um so durch das Klemmglied 291; 691 des ersten Rotorblechs 311 einen größeren Druck auf die erste Seite des Rotormagneten 221; 621 auszuüben als durch das zweite Rotorblech 312.

Gemäß einer bevorzugten Ausführungsform weist das erste Rotorblech 312 auf einer Seite oder auf beiden Seiten ein zweites Rotorblech 312 auf. Hierdurch kann der magnetische Widerstand verringert werden, und es kann bei einer Führung durch die zweiten Rotorbleche eine Führung in beide axiale Richtungen bewirkt werden. Gemäß einer bevorzugten Ausführungsform sind an einem axialen Ende oder an beiden axialen Enden des Rotorblechpakets 200; 600 mindestens fünf zweite Rotorbleche 312 vorgesehen sind, bevor ein erstes Rotorblech 311 vorgesehen ist. Es hat sich gezeigt, dass durch das Vorsehen der Klemmung im Inneren des Innenrotors die vom Motor erzeugten Geräusche reduziert werden können.

Gemäß einer bevorzugten Ausführungsform weist das Rotorblechpaket 200; 600 mindestens zwei erste Rotorbleche 311 auf, wobei bevorzugt maximal sechs erste Rotorbleche 311 vorgesehen sind. In Abhängigkeit von der Größe des Innenrotors haben sich diese Werte als vorteilhaft erwiesen. Bei einem einzigen ersten Rotorblech haben sich Geräusche ergeben, da der Rotormagnet durch das Festhalten an nur einer axialen Höhe in Schwingung geraten kann.

Gemäß einer bevorzugten Ausführungsform weist das erste Rotorblech 312 für jede erste Ausnehmung 211-216 mindestens ein Klemmglied 291; 691 auf. Die Klemmglieder werden also für alle Rotormagneten genutzt.

Gemäß einer bevorzugten Ausführungsform hat ein Elektromotor 100 einen Außenstator 28 und einen Innenrotor 150, wie er beschrieben wurde.

Gemäß einer bevorzugten Ausführungsform hat der Rotormagnet 221 an einem axialen Ende 222 eine Fase mit einer Einzugsbreite B1 in radialer Richtung, und der Rotormagnet 221 weist vor dem Einführen in die Tasche 210 in radialer Richtung ein maximales Übermaß O1 relativ zur Tasche auf, wobei gilt:
Das Verhältnis von B1 zu O1 ist im Bereich 1,5 .. 4,0. Dieses Verhältnis ermöglicht ein gutes Einführen des Rotormagneten 221 in die Tasche, und der Rotormagnet stößt nicht flach gegen ein Rotorblech 311, 312.

Beschrieben ist auch ein Rotorblech 311 zum Halten eines Rotormagneten 221 in einer Tasche 210 eines Rotorblechpakets 200; 600, welches Rotorblech 311 erste Ausnehmungen 211-216; 611 zur Ausbildung der Taschen 210 und mindestens eine zweite Ausnehmung 231-236; 631 aufweist, welche zweite Ausnehmung 231-236; 631 einer ersten Ausnehmung 211-216; 611 zugeordnet und zu dieser in radialer Richtung benachbart ist, wobei zwischen der zweiten Ausnehmung 231-236; 631 und der zugeordneten ersten Ausnehmung 211-216; 611 ein federndes stegförmiges Klemmglied 291; 691 ausgebildet ist, welches Klemmglied 291; 691 einen entspannten Zustand Z1 und einen gespannten Zustand Z2 aufweist, wobei das Verhältnis der ersten Fläche F1 der ersten Ausnehmung 211-216; 611 zur zweiten Fläche F2 der zweiten Ausnehmung 231-236; 631 im entspannten Zustand kleiner ist als im gespannten Zustand, um bei Einführung eines zugeordneten Rotormagneten 221 in die erste Ausnehmung 211-216; 611 einen Übergang des Klemmglieds 291; 691 vom entspannten Zustand Z1 in den gespannten Zustand Z2 zu bewirken, indem das Klemmglied durch den zugeordneten Rotormagneten 221 zur zweiten Ausnehmung 231-236; 631 hin gespannt wird und das Klemmglied 291; 691 hierdurch den zugeordneten Rotormagneten 221 zur ersten Ausnehmung 211-216; 611 hin mit einer Kraft beaufschlagt, um so den zugeordneten Rotormagneten 221 in der Tasche 210 zu halten. Ein solches erstes Rotorblech kann zur Herstellung eines Innenrotors mit den entsprechenden Vorteilen verwendet werden.

Gemäß einer bevorzugten Ausführungsform weist das Klemmglied 291; 691 einen ersten Endabschnitt 291L und einen zweiten Endabschnitt 291R auf, welche jeweils mit dem übrigen Bereich des Rotorblechs 311 verbunden sind, wobei zwischen dem ersten Endabschnitt 291L und dem zweiten Endabschnitt 291R ein mittlerer Abschnitt 291M vorgesehen ist. Hierdurch wird das Klemmglied in das Rotorblech integriert, und es kann an beiden Enden als Teil des Rotorblechs mit dem Rotorblech zusammen wirken.

Gemäß einer bevorzugten Ausführungsform ist der mittlere Abschnitt 291M auf der der ersten Ausnehmung 211-216; 611 zugewandten Seite im entspannten Zustand Z1 zumindest abschnittsweise konvex gekrümmt ausgebildet. Hierdurch wird die Kontaktfläche verringert und der Anpressdruck auf den Rotormagneten erhöht. Außerdem lässt sich eine gute Federwirkung des Klemmglieds erzielen.

Gemäß einer bevorzugten Ausführungsform ist der mittlere Abschnitt 291M auf der der zweiten Ausnehmung 231-236; 631 zugewandten Seite im entspannten Zustand Z1 zumindest abschnittsweise konkav gekrümmt ausgebildet. Hierdurch wird einem vollständigen Eindrücken des Klemmglieds in den zweiten Bereich entgegen gewirkt und es können größere Spannungen aufgebaut werden.

Gemäß einer bevorzugten Ausführungsform weist der mittlere Abschnitt 291M einen Vorsprung auf, welcher in die erste Ausnehmung 211-216; 611 hinein ragt. Dies ermöglicht eine konzentrierter Kraftausübung auf den Rotormagneten und damit einen höheren Anpressdruck.

Gemäß einer bevorzugten Ausführungsform sind dem Rotorblech weitere Rotorbleche 310 zur Bildung eines Rotorblechpakets 200; 600 mit mindestens einer Tasche 210 zugeordnet, welchem Rotorblechpaket 200; 600 ein Rotormagnet 221 zur Anordnung in der Tasche 210 zugeordnet ist, welcher Rotormagnet 221 an einem axialen Ende 222 eine Fase mit einer Einzugsbreite B1 in radialer Richtung aufweist,
bei welchem der Rotormagnet 221 vor dem Einführen in die Tasche 210 in radialer Richtung ein maximales Übermaß O1 relativ zur Tasche aufweist, wobei gilt:
Das Verhältnis von B1 zu O1 ist im Bereich 1,5 .. 4,0. Dieses Verhältnis ermöglicht ein gutes Einführen des Rotormagneten 221 in die Tasche, und der Rotormagnet stößt nicht flach gegen ein Rotorblech 311, 312.

Naturgemäß sind im Rahmen der vorliegenden Erfindung vielfache Abwandlungen und Modifikationen möglich, unter der Voraussetzung, dass sie in den Schutzbereich der Erfindung fallen, wie er in den beigefügten Ansprüchen angegeben ist.

So kann an Stelle der Wälzlager z.B. auch ein Sinterlager verwendet werden.

Die erste Ausnehmung 211 und die zweite Ausnehmung 230 können auch asymmetrisch zueinander angeordnet werden. So kann beispielsweise die zweite Ausnehmung 230 leicht in Umfangsrichtung versetzt zur ersten Ausnehmung 211 vorgesehen werden.

Zu den Vorteilen des erfindungsgemäßen Elektromotors gehört, dass er sich auch mit kleinen Abmessungen realisieren lässt, dass die Toleranzen des Pressverbands Welle/Blechpaket keinen Einfluss auf die Fixierung der Rotormagneten haben und dass im Blechpaket nur geringe plastische Dehnungen auftreten, so dass Materialbruch nicht zu befürchten ist. Aufgrund der einfachen Gestaltung des Blechpakets sind zudem die Werkzeugkosten beim Fertigen der Bleche für das Blechpaket gering.

## Patentansprüche

1. Innenrotor (150) für einen Elektromotor (100),
welcher Innenrotor (150) ein Rotorblechpaket (200; 600) mit einer Mehrzahl von Rotorblechen (310) aufweist, welches Rotorblechpaket (200; 600) eine Mehrzahl von Taschen (210) aufweist, in welchen Taschen (210) jeweils ein Rotormagnet (221; 621) zumindest teilweise angeordnet ist,
welche Rotorbleche erste Ausnehmungen (211; 611) zur Ausbildung der Taschen (210) aufweisen,
welche Rotorbleche (310) mindestens ein erstes Rotorblech (311) mit einer ersten Kontur und mindestens ein zweites Rotorblech (312) mit einer zweiten Kontur aufweisen,
welches erste Rotorblech (311) mindestens eine zweite Ausnehmung (230; 231-236; 631) aufweist, welche zweite Ausnehmung (230; 231-236; 631) einer ersten Ausnehmung (211-216; 611) zugeordnet ist, wobei das Verhältnis der Winkelerstreckung (phi_R2) der zweiten Ausnehmung (230; 231-236; 631) zur Winkelerstreckung (phi_RM) des zugeordneten Rotormagneten (221; 621) im Bereich von 0,4 bis 0,8 liegt,
und wobei zwischen der zweiten Ausnehmung (230; 231-236; 631) und der zugeordneten ersten Ausnehmung (211-216; 611) ein federndes stegförmiges Klemmglied (291; 691) ausgebildet ist, welches Klemmglied (291; 691) bei Einführung des zugeordneten Rotormagneten (221, 621) in die erste Ausnehmung zur zweiten Ausnehmung (231-236; 631) hin gespannt wird,
und welches Klemmglied (291; 691) hierdurch den zugeordneten Rotormagneten (221; 621) zur ersten Ausnehmung (211-216; 611) hin mit einer Kraft beaufschlagt, um den zugeordneten Rotormagneten (221; 621) in der Tasche (210) zu halten,
wobei die zweite Kontur die erste Kontur im Bereich der zweiten Ausnehmung (231) zumindest bereichsweise abdeckt,
**dadurch gekennzeichnet, dass** das zweite Rotorblech (312) das Klemmglied (291; 691) zumindest teilweise abdeckt, um so bei einer Anordnung des zweiten Rotorblechs (312) an dem ersten Rotorblech (311) eine Bewegung des Klemmglieds (291; 691) des ersten Rotorblechs (311) in eine axiale Richtung zum zweiten Rotorblech (312) hin zu begrenzen, jedoch eine Bewegung des Klemmglieds (291; 691) in eine Richtung senkrecht zur axialen Richtung zuzulassen.

2. Innenrotor (150) nach Anspruch 1, bei welchem das Verhältnis der Winkelerstreckung (phi_R2) der zweiten Ausnehmung (230; 231-236; 631) zur Winkelerstreckung (phi_RM) des zugeordneten Rotormagneten (221; 621) im Bereich von 0,5 bis 0,8 liegt, wobei die zweite Ausnehmung (231-236; 631) zur ersten Ausnehmung (211-216; 611) in radialer Richtung benachbart ist.

3. Innenrotor (150) nach einem der vorhergehenden Ansprüche, bei welchem das Klemmglied (291; 691) einen ersten Endabschnitt (291L) und einen zweiten Endabschnitt (291R) aufweist, welche jeweils mit dem übrigen Bereich des Rotorblechs (311) verbunden sind, wobei zwischen dem ersten Endabschnitt (291L) und dem zweiten Endabschnitt (291R) ein mittlerer Abschnitt (291M) vorgesehen ist.

4. Innenrotor (150) nach Anspruch 3, bei welchem am Klemmglied (291; 691) durch die Spannung zur zweiten Ausnehmung (231-236; 631) hin im mittleren Abschnitt (291M) des Klemmglieds (291; 691) zumindest bereichsweise auf der dem Rotormagneten (221) zugewandten Seite eine Druckspannung und auf der vom Rotormagneten (221) abgewandten Seite eine Zugspannung herrschen.

5. Innenrotor (150) nach Anspruch 3 oder 4, bei welchem am Klemmglied (291; 691) durch die Spannung zur zweiten Ausnehmung (231-236; 631) hin im ersten Endabschnitt (291L) und im zweiten Endabschnitt (291R) des Klemmglieds (291; 691) auf der dem Rotormagneten (221) zugewandten Seite eine Zugspannung und auf der vom Rotormagneten (221) abgewandten Seite eine Druckspannung herrschen.

6. Innenrotor (150) nach einem der Ansprüche 3 bis 5, bei welchem der mittlere Abschnitt (291M) auf der der ersten Ausnehmung (211-216; 611) zugewandten Seite zumindest abschnittsweise konvex gekrümmt ausgebildet ist.

7. Innenrotor (150) nach einem der Ansprüche 3 bis 6,
bei welchem der mittlere Abschnitt (291M) einen Vorsprung (692) aufweist, welcher in die erste Ausnehmung (211-216; 611) hinein ragt.

8. Innenrotor (150) nach einem vorhergehenden Ansprüche,
bei welchem der Rotormagnet (221; 621) eine dem Klemmglied (291; 691) zugewandte erste Seite aufweist, und
bei welchem das Klemmglied (291; 691) im gespannten Zustand eine Form aufweist, welche nicht exakt komplementär zur Form der ersten Seite ist, um hierdurch den Rotormagneten (221; 621) in der ersten Ausnehmung (211; 611) auf der ersten Seite nur in einem Teilbereich zu verklemmen.

9. Innenrotor (150) nach einem der vorhergehenden Ansprüche, bei welchem das Klemmglied (291; 691) eine lokale Ausbauchung (292; 692) in radialer Richtung aufweist.

10. Innenrotor (150) nach einem der vorhergehenden Ansprüche,
bei welchem der Rotormagnet (221; 621) eine dem Klemmglied (291; 691) zugewandte erste Seite aufweist,
bei welchem Innenrotor (150) das Klemmglied (291; 691) des ersten Rotorblechs die Kontur des zweiten Rotorblechs (312) teilweise abdeckt, um so durch das Klemmglied (291; 691) des ersten Rotorblechs (311) einen größeren Druck auf die erste Seite des Rotormagneten (221; 621) auszuüben als durch das zweite Rotorblech (312).

11. Innenrotor (150) nach einem der vorhergehenden Ansprüche, bei welchem das erste Rotorblech (312) auf einer Seite oder auf beiden Seiten ein zweites Rotorblech (312) aufweist.

12. Innenrotor (150) nach einem der vorhergehenden Ansprüche, bei welchem an einem axialen Ende oder an beiden axialen Enden des Rotorblechpakets (200; 600) mindestens fünf zweite Rotorbleche (312) vorgesehen sind, bevor ein erstes Rotorblech (311) vorgesehen ist.

13. Innenrotor (150) nach einem der vorhergehenden Ansprüche, bei welchem das erste Rotorblech (312) für jede erste Ausnehmung (211-216) mindestens ein Klemmglied (291; 691) aufweist.

14. Elektromotor (100) mit einem Außenstator (28) und einem Innenrotor (150) nach einem der vorhergehenden Ansprüche, bei welchem der Rotormagnet (221) an einem axialen Ende (222) eine Fase mit einer Einzugsbreite B1 in radialer Richtung aufweist,
bei welchem der Rotormagnet (221) vor dem Einführen in die Tasche (210) in radialer Richtung ein maximales Übermaß O1 relativ zur Tasche aufweist, wobei gilt:
Das Verhältnis von B1 zu O1 ist im Bereich 1,5 .. 4,0.

## Claims

1. An internal rotor (150) for an electric motor (100),
which internal rotor (150) has a laminated rotor core (200; 600) with a multiplicity of rotor plates (310), which laminated rotor core (200; 600) has multiple pockets (210) in each of which a rotor magnet (221; 621) is at least partially arranged,
which rotor plates have first recesses (211; 611) for forming the pockets (210),
which rotor plates (310) have at least a first rotor plate (311) having a first contour and at least a second rotor plate (312) having a second contour,
which first rotor plate (311) has at least a second recess (230; 231-236; 631), which second recess (230; 231-236; 631) is associated with a first recess (211-216; 611), wherein the ratio of the angular extent (phi_R2) of the second recess (230; 231-236; 631) to the angular extent (phi_RM) of the associated rotor magnet (221; 621) is in the range of 0.4 to 0.8,
and wherein, between the second recess (230; 231-236; 631) and the associated first recess (211-216; 611), a sprung web-shaped clamping element (291; 691) is formed, which clamping element (291; 691) is tensioned toward the second recess (231-236; 631) during insertion of the associated rotor magnet (221, 621) in the first recess, and which clamping element (291; 691) as a result applies a force to the associated rotor magnet (221; 621) toward the first recess (211-216; 611) in order to hold the associated rotor magnet (221; 621) in the pocket (210),
wherein the second contour covers the first contour in the area of the second recess (231) at least in sections,
**characterized in that** the second rotor plate (312) at least partially covers the clamping element (291; 691), in order to limit in this manner, in an arrangement of the second rotor plate (312) on the first rotor plate (311), a movement of the clamping element (291; 691) of the first rotor plate (311) in an axial direction toward the second rotor plate (312), while however allowing a movement of the clamping element (291; 691) in a direction perpendicular to the axial direction.

2. The internal rotor (150) according to Claim 1, wherein the ratio of the angular extent (phi_R2) of the second recess (230; 231-236; 631) to the angular extent (phi_RM) of the associated rotor magnet (221; 621) is in the range of 0.5 to 0.8, wherein the second recess (231-236; 631) is adjacent to the first recess (211-216; 611) in radial direction.

3. The internal rotor (150) according to any one of the preceding claims, wherein the clamping element (291; 691) has a first end section (291L) and a second end section (291R), which are each connected to the remaining area of the rotor plate (311), wherein a central section (291M) is provided between the first end section (291L) and the second end section (291R).

4. The internal rotor (150) according to Claim 3, wherein, on the clamping element (291; 691), due to the tensioning toward the second recess (231-236; 631), in the central section (291M) of the clamping element (291; 691), at least in sections on the side facing the rotor magnet (221), a compressive stress exists, and, on the side facing away from the rotor magnet (221), a tensile stress exists.

5. The internal rotor (150) according to Claim 3 or 4, wherein, on the clamping element (291; 691), due to the tensioning toward the second recess (231-236; 631), in the first end section (291L) and in the second end section (291R) of the clamping element (291; 691), a tensile stress exists on the side facing the rotor magnet (221), and a compressive stress exists on the side facing away from the rotor magnet (221).

6. The internal rotor (150) according to any one of Claims 3 to 5, wherein, on the side facing the first recess (211-216; 611), the central section (291M) is designed with convex curvature at least in sections.

7. The internal rotor (150) according to any one of Claims 3 to 6, wherein the central section (291M) has a protrusion (692) which protrudes into the first recess (211-216; 611).

8. The internal rotor (150) according to any one of the preceding claims,
wherein the rotor magnet (221; 621) has a first side facing the clamping element (291; 691), and
wherein the clamping element (291; 691) in the tensioned state has a shape which is not exactly complementary to the shape of the first side, in order to hereby clamp the rotor magnet (221; 621) in the first recess (211; 611) on the first side just in a partial area.

9. The internal rotor (150) according to any one of the preceding claims, wherein the clamping element (291; 691) has a local convexity (292; 692) in radial direction.

10. The internal rotor (150) according to any one of the preceding claims,
wherein the rotor magnet (221; 621) has a first side facing the clamping element (291; 691),
in which internal rotor (150) the clamping element (291; 691) of the first rotor plate partially covers the contour of the second rotor plate (312), in order to exert in this manner a higher pressure on the first side of the rotor magnet (221; 621) by the clamping element (291; 691) of the first rotor plate (311) than by the second rotor plate (312).

11. The internal rotor (150) according to any one of the preceding claims, wherein the first rotor plate (312) has a second rotor plate (312) on one side or on both sides.

12. The internal rotor (150) according to any one of the preceding claims, wherein, on one axial end or the two axial ends of the laminated rotor core (200; 600), at least five second rotor plates (312) are provided before a first rotor plate (311) is provided.

13. The internal rotor (150) according to any one of the preceding claims, wherein the first rotor plate (312) has for each first recess (211-216) at least a clamping element (291; 691).

14. The electric motor (100) having an external stator (28) and an internal rotor (150) according to any one of the preceding claims, wherein the rotor magnet (221) on an axial end (222) has a bevel with a pull-in width B1 in radial direction,
wherein the rotor magnet (221), before the introduction into the pocket (210), has in radial direction a maximum oversize O1 relative to the pocket, wherein the following applies:
the ratio of B1 to O1 is in the range of 1.5 ... 4.0.

## Revendications

1. Rotor intérieur (150) destiné à un moteur électrique (100),
lequel rotor intérieur (150) présente un paquet de tôles rotoriques (200 ; 600) comprenant une pluralité de tôles rotoriques (310), ledit paquet de tôles rotoriques (200 ; 600) présente une pluralité de poches (210) dans lesquelles poches (210) est disposé au moins partiellement respectivement un aimant de rotor (221 ; 621),
lesquelles tôles rotoriques présentent des premiers évidements (211 ; 611) pour réaliser les poches (210),
lesquelles tôles rotoriques (310) présentent au moins une première tôle rotorique (311) pourvue d'un premier contour et au moins une deuxième tôle rotorique (312) pourvue d'un deuxième contour,
laquelle première tôle rotorique (311) présente au moins un deuxième évidement (230 ; 231-236 ; 631), lequel deuxième évidement (230 ; 231-236 ; 631) est associé à un premier évidement (211-216; 611), le rapport entre l'étendue angulaire (phi_R2) du deuxième évidement (230; 231-236; 631) et l'étendue angulaire (phi_RM) de l'aimant de rotor associé (221 ; 621) étant compris dans la plage de 0,4 à 0,8,
et dans lequel un élément de serrage élastique (291 ; 691) en forme d'entretoise est réalisé entre le deuxième évidement (230; 231-236 ; 631) et le premier évidement (211-216 ; 611) associé, lequel élément de serrage (291 ; 691), lors de l'insertion de l'aimant de rotor (221, 621) associé dans le premier évidement est tendu en direction du deuxième évidement (231, 236 ; 631), et lequel élément de serrage (291 ; 691) soumet ainsi l'aimant de rotor (221 ; 621) associé à une force en direction du premier évidement (211-216 ; 611) afin de maintenir l'aimant de rotor associé (221 ; 621) dans la poche (210),
le deuxième contour recouvrant au moins par endroits le premier contour au niveau du deuxième évidement (231),
**caractérisé en ce que** la deuxième tôle rotorique (312) recouvre au moins partiellement l'élément de serrage (291 ; 691) afin de limiter ainsi, dans une disposition de la deuxième tôle rotorique (313) au niveau de la première tôle rotorique (311), un mouvement de l'élément de serrage (291 ; 691) de la première tôle rotorique (311) dans une direction axiale vers la deuxième tôle rotorique (312) mais de permettre un mouvement de l'élément de serrage (291 ; 691) dans une direction perpendiculaire à la direction axiale.

2. Rotor intérieur (150) selon la revendication 1, dans lequel le rapport entre l'étendue angulaire (phi_R2) du deuxième évidement (230 ; 231-236 ; 631) et l'étendue angulaire (phi_RM) de l'aimant de rotor (221 ; 621) associé est compris dans la plage de 0,5 à 0,8, le deuxième évidement (231-236 ; 631) étant adjacent au premier évidement (211-216 ; 611) dans la direction radiale.

3. Rotor intérieur (150) selon l'une quelconque des revendications précédentes, dans lequel l'élément de serrage (291 ; 691) présente une première partie d'extrémité (291L) et une deuxième partie d'extrémité (291R) qui sont respectivement reliées à la zone restante de la tôle rotorique (311), une partie centrale (291M) étant prévue entre la première partie d'extrémité (291L) et la deuxième partie d'extrémité (291R).

4. Rotor intérieur (150) selon la revendication 3, dans lequel, au niveau de l'élément de serrage (291 ; 691), en raison de la tension en direction du deuxième évidement (231-236 ; 631), dans la partie centrale (291M) de l'élément de serrage (291 ; 691), au moins par endroits, une contrainte de compression règne sur le côté tourné vers l'aimant de rotor (221) et une contrainte de traction règne sur le côté détourné de l'aimant de rotor (221).

5. Rotor intérieur (150) selon la revendication 3 ou 4, dans lequel, au niveau de l'élément de serrage (291 ; 691), en raison de la tension en direction du deuxième évidement (231-236 ; 631), dans la première partie d'extrémité (291L) et dans la deuxième partie d'extrémité (291R) de l'élément de serrage (291 ; 691), une contrainte de traction règne sur le côté tourné vers l'aimant de rotor (221) et une contrainte de compression règne sur le côté détourné de l'aimant de rotor (221).

6. Rotor intérieur (150) selon l'une quelconque des revendications précédentes 3 à 5, dans lequel la partie centrale (291M) est réalisée au moins par endroits avec une courbure convexe sur le côté tourné vers le premier évidement (211-216 ; 611).

7. Rotor intérieur (150) selon l'une quelconque des revendications 3 à 6, dans lequel la partie centrale (291M) présente une saillie (692) qui dépasse dans le premier évidement (211-216 ; 611).

8. Rotor intérieur (150) selon l'une quelconque des revendications précédentes,
dans lequel l'aimant de rotor (221 ; 621) présente un premier côté tourné vers l'élément de serrage (291 ; 691), et
dans lequel l'élément de serrage (291 ; 691) présente à l'état tendu une forme qui n'est pas exactement complémentaire à la forme du premier côté afin de caler ainsi l'aimant de rotor (221 ; 621) dans le premier évidement (211 ; 611) sur le premier côté uniquement dans une zone partielle.

9. Rotor intérieur (150) selon l'une quelconque des revendications précédentes, dans lequel l'élément de serrage (291 ; 691) présente une convexité locale (292 ; 692) dans la direction radiale.

10. Rotor intérieur (150) selon l'une quelconque des revendications précédentes,
dans lequel l'aimant de rotor (221 ; 621) présente un premier côté tourné vers l'élément de serrage (291 ; 691),
sur lequel rotor intérieur (150) l'élément de serrage (291 ; 691) de la première tôle rotorique recouvre partiellement le contour de la deuxième tôle rotorique (312) afin d'exercer ainsi une plus grande pression sur le premier côté de l'aimant de rotor (221 ; 621) par l'élément de serrage (291 ; 691) de la première tôle rotorique (311) que par la deuxième tôle rotorique (312).

11. Rotor intérieur (150) selon l'une quelconque des revendications précédentes, dans lequel la première tôle rotorique (312) présente sur un côté ou sur les deux côtés une deuxième tôle rotorique (312).

12. Rotor intérieur (150) selon l'une quelconque des revendications précédentes, dans lequel, à une extrémité axiale ou aux deux extrémités axiales du paquet de tôles rotoriques (200 ; 600), au moins cinq deuxièmes tôles rotoriques (312) sont prévues avant qu'une première tôle rotorique (311) ne soit prévue.

13. Rotor intérieur (150) selon l'une quelconque des revendications précédentes, dans lequel la première tôle rotorique (312) présente pour chaque premier évidement (211-216) au moins un élément de serrage (291 ; 691).

14. Moteur électrique (100) comprenant un stator extérieur (28) et un rotor intérieur (150) selon l'une quelconque des revendications précédentes,
dans lequel l'aimant de rotor (221) présente à une extrémité axiale (222) un biseau d'une largeur d'admission B1 dans la direction radiale,
dans lequel l'aimant de rotor (221), avant introduction dans la poche (210), présente dans la direction radiale une surcote maximale O1 par rapport à la poche, avec la condition que :
le rapport de B1 à O1 soit compris dans la plage de 1,5 à 4,0.
